# EUROPEAN PATENT APPLICATION

(11) **EP 4 629 074 A1**
(43) Date of publication of application: **08.10.2025**
(21) Application number: 24847699.6
(22) Date of filing: 11.05.2024
(51) Int. Cl.: G06F 9/48

(54) **TASK EXECUTION METHOD AND APPARATUS, DEVICE AND STORAGE MEDIUM**

(30) Priority: 02.08.2023 CN 202310966040
(71) Applicant: Tencent Technology (Shenzhen) Company Limited, Shenzhen, Guangdong 518057 (CN)
(72) Inventor: DANG, Peng, Shenzhen, Guangdong 518057 (CN); JIANG, Jie, Shenzhen, Guangdong 518057 (CN); LIU, Yuhong, Shenzhen, Guangdong 518057 (CN); CHEN, Peng, Shenzhen, Guangdong 518057 (CN); TANG, Tun, Shenzhen, Guangdong 518057 (CN); XUE, Wenwei, Shenzhen, Guangdong 518057 (CN); GUO, Tianlian, Shenzhen, Guangdong 518057 (CN)
(74) Representative: EP&C
(86) International application number: PCT/CN2024/092505
(87) International publication number: WO 2025/025734

(57) **Abstract**

The present application relates to the field of computer technologies, and discloses a task execution method and apparatus, a device and a storage medium. The method is executed by a first component, and comprises : receiving a data processing task, wherein the data processing task is a task to be collaboratively processed by a plurality of computing engines; splitting the data processing task on the basis of a plurality of data sources registered on the first component to obtain a plurality of data processing sub-tasks; determining execution correspondences between the plurality of data processing sub-tasks and the plurality of computing engines; and on the basis of the execution correspondences, distributing the plurality of data processing sub-tasks to task execution engines among the plurality of computing engines.

## Description

### RELATED APPLICATION

This application claims priority to Chinese Patent Application No. 202310966040.0, filed with the China National Intellectual Property Administration on August 02, 2023 and entitled "TASK EXECUTION METHOD AND APPARATUS, DEVICE, AND STORAGE MEDIUM", which is incorporated herein by reference in its entirety.

### FIELD OF THE TECHNOLOGY

Embodiments of the present disclosure relate to the field of computer technologies, and in particular, to a task execution method and apparatus, a device, and a storage medium.

### BACKGROUND OF THE DISCLOSURE

Big data refers to a collection of data that cannot be captured, managed, and processed by using conventional software tools within a specific time range. Big data is an information asset that needs a new processing mode to have stronger decision-making power, insight discovery, and process optimization capabilities. A data processing process is implemented by using different computing engines according to a difference in big data processing requirements; and when a complex data processing process needs to be completed, computing engines of different types are required to be added to a data architecture configured to process big data, to meet a requirement of unified data processing across a plurality of engines.

In the related art, to perform unified data analysis across a plurality of computing engines, cross-domain computation of the computing engines is usually optimized by adjusting interfaces inside the computing engines, whereby a domain name or port other than an application domain name or port can be accessed through the computing engines.

As a volume of big data increases, in consideration of efficient processing characteristics of cloud computing, data is gradually processed in a multi-cloud (a plurality of cloud environments) scenario. The multi-cloud scenario includes a hybrid cloud (a hybrid cloud environment), cross-cloud, and the like. Optimization of the foregoing computing engines focuses on a single computing engine. A federated scenario among the computing engines distributed under a plurality of cloud platforms is not fully considered, and a federated analysis process across the computing engines cannot be implemented well.

### SUMMARY

Embodiments of the present disclosure provide a task execution method and apparatus, a device, and a storage medium, which simplify a manner of executing a data processing task by splitting the data processing task, and perform more targeted execution on a data processing subtask by fully using different computing engines to improve task execution efficiency. The following technical solutions are provided.

According to an aspect, a task execution method for processing data is provided, executable by a first processing component. The method includes:
receiving a data processing task to be cooperatively executed by a plurality of computing engines, wherein the plurality of computing engines and a plurality of data sources respectively invoked by the plurality of computing engines are registered on the first processing component;
splitting the data processing task based on the plurality of data sources, for obtaining a plurality of data processing subtasks, each computing engine being configured to invoke the at least one of the plurality of data sources in order to execute at least one of the plurality of data processing subtasks;
determining execution correspondences between the plurality of data processing subtasks and the plurality of computing engines; and
distributing the plurality of data processing subtasks to task execution engines in the plurality of computing engines based on the execution correspondences, the task execution engines being computing engines configured to execute the plurality of data processing subtasks.

According to another aspect, a task execution apparatus is provided. The apparatus includes:
a task receiving module, configured to receive a data processing task, the data processing task being a task to be cooperatively executed by a plurality of computing engines, and the plurality of computing engines and at least one data source respectively invoked by the plurality of computing engines being registered with a first processing component;
a task splitting module, configured to split the data processing task based on the plurality of data sources registered with the first processing component, to obtain a plurality of data processing subtasks, each computing engine being configured to invoke the data source to execute at least one data processing subtask;
a relationship determining module, configured to determine execution correspondences between the plurality of data processing subtasks and the plurality of computing engines; and
a task distributing module, configured to distribute the plurality of data processing subtasks to task execution engines in the plurality of computing engines based on the execution correspondences, the task execution engines being computing engines configured to execute the data processing subtasks.

According to another aspect, a computer device is provided. The computer device includes a processor and a memory, the memory having at least one instruction, at least one program, a code set, or an instruction set stored therein, the at least one instruction, the at least one program, the code set, or the instruction set being loaded and executed by the processor to implement the task execution method according to any one of the foregoing embodiments of the present disclosure.

According to another aspect, a computer-readable storage medium is provided, having at least one instruction, at least one program, a code set, or an instruction set stored therein, the at least one instruction, the at least one program, the code set, or the instruction set being loaded and executed by a processor to implement the task execution method according to any one of the foregoing embodiments of the present disclosure.

According to another aspect, a computer program product or a computer program is provided. The computer program product or the computer program includes computer instructions, and the computer instructions are loaded and executed by a processor to implement the task execution method according to any one of the foregoing embodiments of the present disclosure.

### BRIEF DESCRIPTION OF THE DRAWINGS

To describe the technical solutions in the embodiments of the present disclosure more clearly, the following briefly introduces the accompanying drawings required for describing the embodiments. Apparently, the accompanying drawings in the following description show only some embodiments of the present disclosure, and those of ordinary skill in the art may still derive other drawings from these accompanying drawings without creative efforts.
FIG. 1 is a schematic diagram of an implementation environment according to an exemplary embodiment of the present disclosure.
FIG. 2 is a flowchart of a task execution method according to an exemplary embodiment of the present disclosure.
FIG. 3 is a flowchart of a task execution method according to another exemplary embodiment of the present disclosure.
FIG. 4 is a flowchart of a task execution method according to still another exemplary embodiment of the present disclosure.
FIG. 5 is a schematic architectural diagram of distributing a plurality of data processing subtasks to a task execution engine according to an exemplary embodiment of the present disclosure.
FIG. 6 is a flowchart of a task execution method according to yet another exemplary embodiment of the present disclosure.
FIG. 7 is a schematic architectural diagram of registering a computing engine and a data source with a first processing component according to an exemplary embodiment of the present disclosure.
FIG. 8 is a flowchart of transmitting a task execution result according to an exemplary embodiment of the present disclosure.
FIG. 9 is a flowchart of a data routing algorithm according to an exemplary embodiment of the present disclosure.
FIG. 10 is a structural block diagram of a task execution apparatus according to an exemplary embodiment of the present disclosure.
FIG. 11 is a structural block diagram of a task execution apparatus according to another exemplary embodiment of the present disclosure.
FIG. 12 is a structural block diagram of a server according to an exemplary embodiment of the present disclosure.

### DESCRIPTION OF EMBODIMENTS

To make the objectives, technical solutions, and advantages of the present disclosure clearer, the following further describes implementations of the present disclosure in detail with reference to the accompanying drawings.

First, terms described in embodiments of the present disclosure are briefly introduced.

Hybrid cloud: it is one form of cloud computing that enables a private cloud and a public cloud to work together to improve cross-cloud resource utilization of a user. The hybrid cloud helps the user manage cross-cloud and cross-region information technology (IT) infrastructure, and is an organic overall system including various resources and products in the public cloud and the private cloud.

Multi-cloud: it refers to use of a plurality of cloud computing services from a plurality of cloud providers (including a private cloud and a public cloud) in a heterogeneous environment. A multi-cloud policy provides greater flexibility and reduces risks. A service most suitable for a particular task is selected from different cloud providers, or a service provided by a particular cloud provider at a particular location is used.

Structured Query Language (SQL): SQL is a computer language, and is configured for storing, retrieving, and modifying data stored in a relational data source. A data source is a system configured to store and process data, such as a conventional relational database (MySQL), an object relational database (PostgreSQL), a clickstream data source (Clickstream Data Warehouse (ClickHouse)), or the like, or a data warehouse tool (Hive), a distributed data source (Hadoop Database (HBase)), and a distributed search (Elasticsearch) of a big data NoSQL system, or the like.

In the related art, to perform unified data analysis across a plurality of computing engines, cross-domain computation of the computing engines is usually optimized by adjusting interfaces inside the computing engines, whereby a domain name or port other than an application domain name or port can be accessed through the computing engines. As a volume of big data increases, in consideration of efficient processing characteristics of cloud computing, data is gradually processed in a multi-cloud (a plurality of cloud environments) scenario. The multi-cloud scenario includes a hybrid cloud (a hybrid cloud environment), cross-cloud, and the like. Optimization of the foregoing computing engines focuses on a single computing engine. A federated scenario among the computing engines distributed under a plurality of cloud platforms is not fully considered, and a federated analysis process across the computing engines cannot be implemented well.

In the embodiments of the present disclosure including the embodiments of both the claims and the specification (hereinafter referred to as "all embodiments of the present disclosure"), a data processing task to be cooperatively executed by a plurality of computing engines is received, metadata respectively corresponding to the plurality of computing engines is acquired, and the data processing task is further split based on the metadata to obtain a plurality of data processing subtasks. The plurality of data processing subtasks are distributed to task execution engines based on execution correspondences between the plurality of data processing subtasks and the plurality of computing engines, to execute the data processing subtasks. The data processing task is split based on a plurality of data sources, to determine, based on invocation of the data sources by the computing engines, the data processing subtasks executed by different computing engines. A manner of executing the data processing task is simplified by splitting the data processing task, more targeted execution is performed on the data processing subtasks by fully using different computing engines, and task execution efficiency is improved. The task execution method can be applied to a plurality of data processing scenarios such as a sales data processing scenario, a medical data processing scenario, a financial data processing scenario, and a traffic data processing scenario. The foregoing scenarios are merely exemplary, and are not limited in all embodiments of the present disclosure.

Information (including but not limited to user device information, user personal information, and the like), data (including but not limited to data for analysis, stored data, displayed data, and the like), and signals involved in the present disclosure all are authorized by a user or fully authorized by each party, and the collection, use, and processing of relevant data need to comply with relevant laws and regulations and standards of relevant countries and regions. For example, content such as data processing tasks and data sources involved in the present disclosure is acquired with full authorization.

An implementation environment involved in all embodiments of the present disclosure is described. A task execution method provided in all embodiments of the present disclosure may be performed by a terminal alone, may be performed by a server alone, or may be performed by both the terminal and the server through data interaction. This is not limited in all embodiments of the present disclosure. A description is made by using an example in which the terminal and the server interact to perform the task execution method.

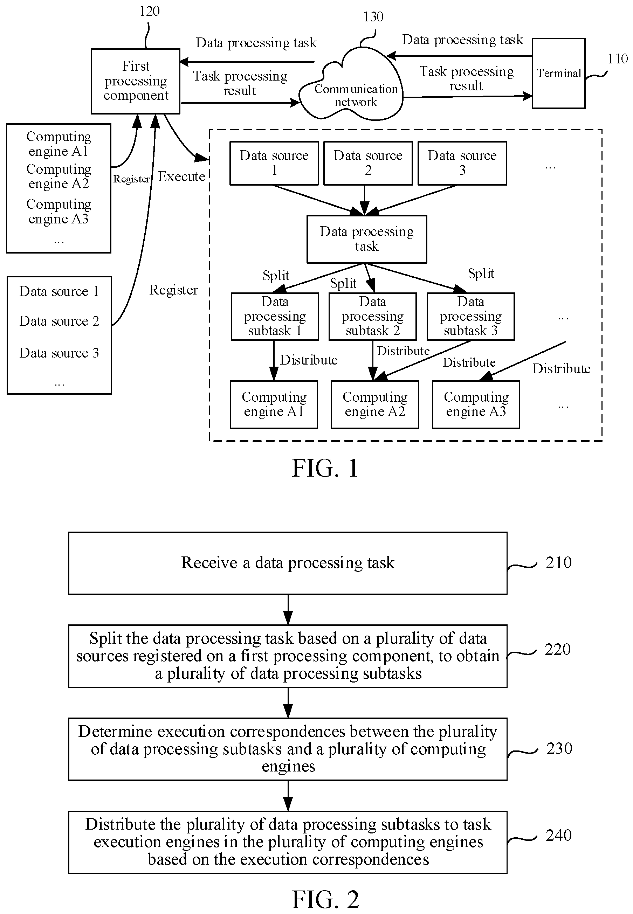

Refer to FIG. 1. Exemplarily, the implementation environment involves a terminal 110 and a first processing component 120. The terminal 110 is connected to the first processing component 120 through a communication network 130.

In all embodiments of the present disclosure, the terminal 110 corresponds to a plurality of functions, to implement functions such as searching for a file, a chat session, and audio playback. In a process of implementing the foregoing functions, data related to the functions needs to be processed.

The terminal 110 receives a function trigger operation, and generates a data processing task based on the function trigger operation. The data processing task is configured for representing a task for processing function-related data. The data processing task is a task that needs to be completed by using a management component. The terminal 110 transmits the data processing task to the first processing component 120 over the communication network 130, to implement a data processing process by using the first processing component 120.

Exemplarily, the first processing component 120 receives the data processing task. The data processing task is a task to be cooperatively executed by a plurality of computing engines.

The plurality of computing engines and a plurality of data sources invoked by the computing engines are registered with the first processing component.

In all embodiments of the present disclosure, the first processing component 120 splits the data processing task based on the plurality of data sources registered with the first processing component, to obtain a plurality of data processing subtasks.

The first processing component 120 splits the data processing task based on attribute information represented by the plurality of data sources, to determine invocation conditions of the data sources when the data processing subtask is processed.

Each computing engine is configured to invoke the data source to execute at least one data processing subtask.

Exemplarily, when the data processing subtask is executed based on the data source, the computing engine for invoking the data source performs data processing on the data processing subtask. For example, when a data processing subtask 1 is executed based on a data source 1, the data processing subtask 1 is executed by using a computing engine A1 based on the data source 1, which indicates that the computing engine A1 executes the data processing subtask 1 by invoking the data source 1.

In all embodiments of the present disclosure, the first processing component 120 determines execution correspondences between the plurality of data processing subtasks and the plurality of computing engines. Exemplarily, an execution condition of the data processing subtask executed by each computing engine invoking the data source is analyzed, to determine the execution correspondences between the plurality of data processing subtasks and the plurality of computing engines.

In all embodiments of the present disclosure, the plurality of data processing subtasks are distributed to corresponding task execution engines based on the execution correspondences. The task execution engines are computing engines configured to execute the data processing subtasks. Exemplarily, the execution correspondence indicates that the computing engine A1 executes the data processing subtask 1 by invoking the data source 1, which indicates that the data processing subtask 1 is executed by the computing engine A1, and the data processing subtask 1 is distributed to the computing engine A1 based on the execution correspondence.

The plurality of computing engines respectively receive at least one data processing subtask, and respectively perform data processing on the received at least one data processing subtask, to obtain data processing results respectively corresponding to the plurality of data processing subtasks. Exemplarily, the first processing component 120 transmits the plurality of data processing results to the terminal 110 over the communication network 130. Alternatively, the first processing component 120 aggregates the plurality of data processing results to obtain a task execution method, and transmits the task execution method to the terminal 110 over the communication network 130.

The terminal includes, but is not limited to, a mobile terminal such as a mobile phone, a tablet computer, a portable laptop, an intelligent voice interaction device, a smart home appliance, and an in-vehicle terminal, and may alternatively be implemented as a desktop computer and the like. The first processing component is deployed in a plurality of cloud environments. For example, a cloud environment is an environment developed under a cloud platform, and includes at least one cloud server. A multi-cloud environment (a plurality of cloud environments) is a communication environment in which a plurality of cloud platforms are in communication connection, and includes a plurality of cloud servers. For example, the first processing component is a component deployed in any cloud server in the multi-cloud environment. Alternatively, the first processing component is an independent component deployed in the multi-cloud environment, or the like.

The cloud server is configured to provide basic cloud computing services, such as a cloud service, a cloud database, cloud computing, a cloud function, cloud storage, a network service, cloud communication, a middleware service, a domain name service, a security service, a content delivery network (CDN), and a big data and artificial intelligence platform.

A cloud technology is a hosting technology that unifies a series of resources such as hardware, application programs, and a network in a wide area network or a local area network, to implement data computing, storage, processing, and sharing. The cloud technology is a general term for network technologies, information technologies, integration technologies, management platform technologies, application technologies, and the like applied based on a cloud computing business model, and may form a resource pool that is applied on-demand and offers flexibility and convenience.

In all embodiments of the present disclosure, the foregoing server may further be implemented as a node in a blockchain system.

A task execution method provided in the present disclosure is described with reference to the above terminologies and application scenarios. The method provided in all embodiments of the present disclosure may be applied to various scenarios such as a cloud technology, artificial intelligence, and smart transportation. A description is made by using an example in which the method is applied to a first processing component. As shown in FIG. 2, the method includes operation 210 to operation 240.

Operation 210: Receive a data processing task.

Exemplarily, the data processing task is configured for performing a targeted data processing process, to achieve a data processing effect.

The data processing task is configured for triggering a function. For example, the data processing task is configured for determining interface content displayed after a control A on a terminal is triggered. Alternatively, the data processing task is configured for acquire data. For example, the data processing task is configured for acquiring related data information and the like based on an instruction 1.

The data processing task is a task transmitted by a client. Alternatively, the data processing task is a task transmitted by a server.

The data processing task is a task to be cooperatively executed by a plurality of computing engines.

Exemplarily, each computing engine is a program configured to process data. Data is stored in a data source (also referred to as a database). In a conventional scenario, in the data source, a storage engine for data storage and a computing engine for data computation are integrated. With the advent of the big data era, a data computing volume increases. Therefore, the storage engine and the computing engine evolve separately, to improve flexibility of data source processing, and the computing engine is configured for representing a program for processing data in the data source.

Each computing engine is configured to invoke at least one data source. Exemplarily, a computing engine 1 invokes a data source A and a data source B, a computing engine 2 is configured to invoke a data source C, a computing engine 3 is configured to invoke the data source A and a data source D, and so on.

In all embodiments of the present disclosure, the data processing task is received by using the first processing component, and the data processing task is a task that needs to be cooperatively executed by the plurality of computing engines.

The plurality of computing engines and a plurality of data sources invoked by the computing engines are registered with the first processing component.

Based on a registration process, the first processing component can roughly learn engine information of the plurality of computing engines and data source information respectively corresponding to the plurality of data sources, whereby the first processing component can determine, under the data processing task, how to invoke the data sources by using the computing engines, to execute the data processing task.

Operation 220: Split the data processing task based on a plurality of data sources registered with a first processing component, to obtain a plurality of data processing subtasks.

Exemplarily, after the plurality of data sources are registered with the first processing component, the first processing component can determine, based on the registration process, attribute information respectively corresponding to the plurality of data sources, and then split the data processing task based on the attribute information respectively corresponding to the plurality of data sources.

Each computing engine is configured to invoke the data source to execute at least one data processing subtask.

Exemplarily, when the data processing subtask is executed based on the data source, a data processing process needs to be performed by using the computing engine configured to process data in the data source. For example, the plurality of data sources include a data source 1, a data source 2, and a data source 3. A computing engine M performs a data processing process by invoking the data source 1, and a computing engine N performs a data processing process by invoking the data source 2 and the data source 3.

In all embodiments of the present disclosure, a process of splitting the data processing subtask is related to not only the data source, but also the computing engine that invokes the data source. Exemplarily, the data processing task is split based on invocation correspondences of the plurality of data sources when the data processing task is executed.

Each invocation correspondence is configured for representing a relationship in which the data source is invoked by the computing engine.

In all embodiments of the present disclosure, invocation correspondences between the plurality of data sources and the plurality of computing engines are determined based on the plurality of computing engines registered with the first processing component.

Operation 230: Determine execution correspondences between the plurality of data processing subtasks and the plurality of computing engines.

Exemplarily, based on that the computing engine is configured to invoke the data source to execute at least one data processing subtask, the computing engine configured to process the data processing subtask can be determined, and then the computing engines configured to respectively process the plurality of data processing subtasks can be determined. That is, the execution correspondences between the plurality of data processing subtasks and the plurality of computing engines are determined.

For example, the computing engine M executes a data processing subtask A1 by invoking the data source 1, which indicates that an execution correspondence exists between the computing engine M and the data processing subtask A1. The computing engine N executes a data processing subtask A2 by invoking the data source 2 and the data source 3, which indicates that an execution correspondence exists between the computing engine N and the data processing subtask A2.

In all embodiments of the present disclosure, one computing engine can execute at least one data processing subtask.

Exemplarily, the computing engine M is configured to execute the data processing subtask A1. Alternatively, the computing engine M is configured to execute the data processing subtask A1 and a data processing subtask A3.

For example, the computing engine M executes the data processing subtask A1 by invoking the data source 1. Alternatively, the computing engine M executes the data processing subtask A1 by invoking the data source 1, and the computing engine M executes the data processing subtask A3 by invoking the data source 1 and a data source 4.

Operation 240: Distribute the plurality of data processing subtasks to task execution engines in the plurality of computing engines based on the execution correspondences.

Exemplarily, after the execution correspondences between the plurality of data processing subtasks and the plurality of computing engines are determined, each data processing subtask is analyzed, the computing engine having the execution correspondence with each data processing subtask is determined, and the data processing subtask is transmitted to the computing engine having the execution correspondence with the data processing subtask.

The task execution engines are computing engines configured to execute the data processing subtasks.

The computing engine having the execution correspondence with the data processing subtask is referred to as a task execution engine. Determination of the computing engine having the execution correspondence with each data processing subtask is determination of the task execution engine corresponding to each data processing subtask. The plurality of data processing subtasks are respectively transmitted (distributed) to the corresponding task execution engines, and the task execution engines execute the received at least one data processing subtask.

Exemplarily, the plurality of data processing subtasks include the data processing subtask A1 and the data processing subtask A2. Based on the execution correspondences, the computing engine M is determined as a task execution engine corresponding to the data processing subtask A1, and the computing engine N is determined as a task execution engine corresponding to the data processing subtask A2. When the plurality of data processing subtasks are distributed to the task execution engines configured to execute the data processing subtasks, the data processing subtask A1 is transmitted to the computing engine M, and the data processing subtask A2 is transmitted to the computing engine N.

In conclusion, the first processing component receives the data processing task to be cooperatively executed by the plurality of computing engines, splits the data processing task based on the plurality of data sources registered with the first processing component, each computing engine being configured to invoke the data source to execute at least one data processing subtask, and then distributes the plurality of data processing subtasks to the plurality of computing engines based on the execution correspondences between the plurality of data processing subtasks and the plurality of computing engines. The data processing task is split based on the plurality of data sources, to determine, based on invocation of the data sources by the computing engines, the data processing subtasks executed by different computing engines. A manner of executing the data processing task is simplified by splitting the data processing task, more targeted execution is performed on the data processing subtasks by fully using different computing engines, and task execution efficiency is improved.

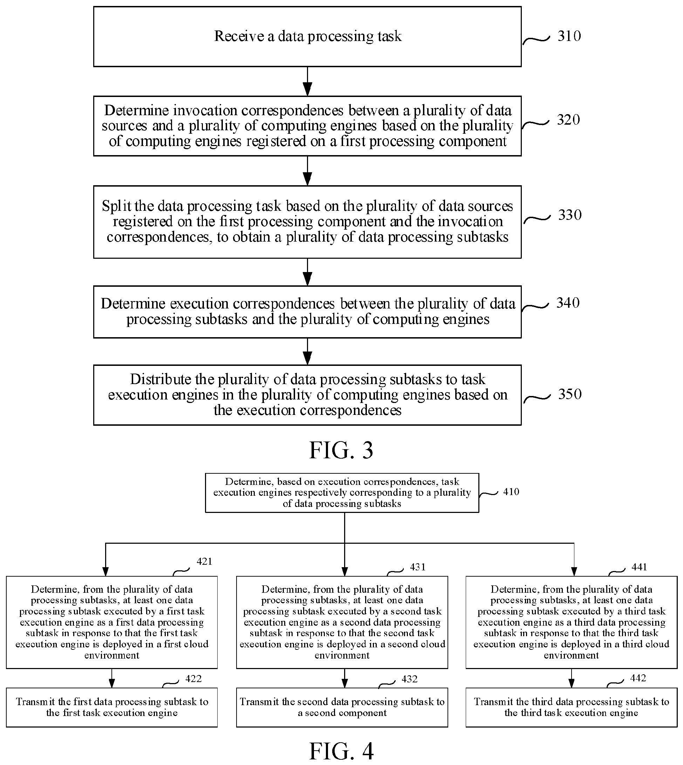

In all embodiments of the present disclosure, the data processing task is split based on the invocation correspondences between the data sources and the computing engines, and a process of distributing the data processing subtask is implemented based on the execution correspondences between the computing engines and the data processing subtasks. Exemplarily, as shown in FIG. 3, the embodiment shown in FIG. 2 may further be implemented by operation 310 to operation 350. Operation 220 in the embodiment shown in FIG. 2 may further be implemented by operation 320 and operation 330.

Operation 310: Receive a data processing task.

The data processing task is a task to be cooperatively executed by a plurality of computing engines, and the plurality of computing engines and a plurality of data sources invoked by the computing engines are registered with a first processing component.

In all embodiments of the present disclosure, the first processing component is a component deployed in a first cloud environment, a large quantity of computing engines are deployed in the first cloud environment, the large quantity of computing engines deployed in the first cloud environment are registered with the first processing component, and the first processing component can perform centralized management on the large quantity of computing engines in the first cloud environment.

The plurality of computing engines configured for the data processing task to be cooperatively executed by the plurality of computing engines are included in the large quantity of computing engines in the first cloud environment; and after receiving the data processing task, the first processing component performs cooperative processing on the data processing task by managing the plurality of computing engines that are in the large quantity of computing engines and that are configured to execute the data processing task.

One part of the plurality of computing engines configured for the data processing task to be cooperatively executed by the plurality of computing engines are included in the large quantity of computing engines in the first cloud environment, and the other part of the plurality of computing engines are included in a large quantity of computing engines outside the first cloud environment. For example, the other part of the plurality of computing engines are included in a large quantity of computing engines in a second cloud environment. After the first processing component receives the data processing task, based on registration conditions of the plurality of computing engines registered with the first processing component, by managing one part of the computing engines in the first cloud environment and managing the other part of the computing engines in the second cloud environment, a process of performing cooperative processing on the data processing task by using the plurality of computing engines is implemented.

In all embodiments of the present disclosure, based on that the plurality of computing engines and the plurality of data sources invoked by the computing engines are registered with the first processing component, a registration relationship between the first processing component and the plurality of computing engines is referred to as a first registration relationship, and a registration relationship between the first processing component and the plurality of data sources is referred to as a second registration relationship.

The first registration relationship exists between the first processing component and the plurality of computing engines configured for cooperatively processing the data processing task. The first registration relationship is configured for representing the data sources invoked by the computing engines. For example, a computing engine 1 and a computing engine 2 are registered with the first processing component, and the first registration relationship existing between the first processing component and the computing engine 1 indicates that: the computing engine 1 is configured to invoke a data source A and a data source B; and the first registration relationship existing between the first processing component and the computing engine 2 indicates that: the computing engine 2 is configured to invoke a data source C.

The second registration relationship exists between the first processing component and the plurality of data sources invoked by the computing engines. The second registration relationship is configured for representing data source information corresponding to the data sources (such as metadata corresponding to the data sources). For example, the data source A and the data source B are registered with the first processing component, and the second registration relationship existing between the first processing component and the data source A indicates an attribute condition of the data source A; and the second registration relationship existing between the first processing component and the data source B indicates an attribute condition of the data source B.

Operation 320: Determine invocation correspondences between a plurality of data sources and a plurality of computing engines based on the plurality of computing engines registered with a first processing component.

Each invocation correspondence is configured for representing a relationship in which the data source is invoked by the computing engine.

Based on that the plurality of computing engines are registered with the first processing component, the first processing component acquires engine information transmitted by the plurality of computing engines. The engine information is configured for representing the data sources invoked by the computing engines.

Exemplarily, the first processing component reads, through interfaces respectively configured for the plurality of computing engines, the engine information corresponding to the computing engines.

The first processing component acquires the engine information respectively corresponding to the plurality of computing engines, to determine the invocation correspondences between the plurality of data sources and the plurality of computing engines based on invocation of the data sources by the computing engines that are represented by the engine information.

Exemplarily, a data source 1 is invoked by a computing engine M, which indicates that an invocation correspondence exists between the data source 1 and the computing engine M; a data source 2 is invoked by a computing engine N, which indicates that an invocation correspondence exists between the data source 2 and the computing engine N; and a data source 3 is also invoked by the computing engine N, which indicates that an invocation correspondence exists between the data source 3 and the computing engine N.

In all embodiments of the present disclosure, the metadata corresponding to the plurality of data sources is acquired.

Exemplarily, after the plurality of data sources are registered with the first processing component, the first processing component can acquire the metadata respectively corresponding to the plurality of data sources. The metadata is configured for representing attribute information corresponding to the data sources.

Based on that the data sources are configured for storing data, and the metadata is data configured for describing the data sources, the attribute information represented by the metadata includes at least one of a plurality of types of information configured for describing the data sources, such as data source type information (such as, a type of data stored in the data sources), data source volume information (such as, a volume of data stored in the data sources), and a data source storage location (such as, storage locations of the data sources), data source historical access information, and data source log information.

In all embodiments of the present disclosure, after the plurality of data sources are registered with the first processing component, the first processing component acquires, through interfaces that are on the plurality of data sources and that communicate with the first processing component, the metadata respectively corresponding to the plurality of data sources.

Exemplarily, after the data source 1 is registered with the first processing component, the first processing component may acquire metadata corresponding to the data source 1 from an interface a on the data source 1. The interface a is an interface that is pre-agreed with the first processing component based on a registration process and that is configured to acquire the metadata.

The plurality of data sources periodically determine the metadata represented by the plurality of data sources. After the data source 1 is registered with the first processing component, the first processing component may acquire, from the interface a on the data source 1, the metadata corresponding to the data source 1 in a latest period. Alternatively, after the data source 1 is registered with the first processing component, the first processing component transmits a metadata acquiring request to the data source 1 through the interface a on the data source 1, to trigger the data source 1 to determine corresponding metadata and transmit the metadata corresponding to the data source 1 to the first processing component.

Operation 330: Split the data processing task based on the plurality of data sources registered with the first processing component and the invocation correspondences, to obtain a plurality of data processing subtasks.

After the plurality of data sources registered with the first processing component and the invocation correspondences between the plurality of data sources and the plurality of computing engines are determined, the data processing task is split based on the plurality of data sources and the invocation correspondences.

A task processing part implemented by at least one data source of a same computing engine when the data processing task is executed is determined based on the plurality of data sources registered with the first processing component and the invocation correspondences.

Exemplarily, the computing engine M can implement a task processing part a in a data processing task A by invoking the data source 1, and the computing engine N can implement a task processing part b in the data processing task A by invoking the data source 2. Alternatively, the computing engine M can implement the task processing part a in the data processing task A by invoking the data source 1, and the computing engine N can implement the task processing part b in the data processing task A by invoking the data source 2 and the data source 3.

The data processing task is split based on the task processing parts respectively corresponding to the plurality of computing engines, to obtain the plurality of data processing subtasks.

Exemplarily, based on that the computing engine M is configured to complete the task processing part a, and the computing engine N is configured to complete the task processing part b, the data processing task may be split based on the splitting process, to obtain a data processing subtask A1 representing the task processing part a, and obtain a data processing subtask A2 representing the task processing part b.

In all embodiments of the present disclosure, the metadata corresponding to the plurality of data sources is acquired.

Exemplarily, after the plurality of data sources are registered with the first processing component, the first processing component can acquire the metadata respectively corresponding to the plurality of data sources. The metadata is configured for representing attribute information corresponding to the data sources.

In all embodiments of the present disclosure, after the plurality of data sources are registered with the first processing component, the first processing component acquires, through interfaces that are on the plurality of data sources and that communicate with the first processing component, the metadata respectively corresponding to the plurality of data sources.

Exemplarily, after the data source 1 is registered with the first processing component, the first processing component may acquire metadata corresponding to the data source 1 from an interface a on the data source 1. The interface a is an interface that is pre-agreed with the first processing component based on a registration process and that is configured to acquire the metadata.

The plurality of data sources periodically determine the metadata represented by the plurality of data sources. After the data source 1 is registered with the first processing component, the first processing component may acquire, from the interface a on the data source 1, the metadata corresponding to the data source 1 in a latest period. Alternatively, after the data source 1 is registered with the first processing component, the first processing component transmits a metadata acquiring request to the data source 1 through the interface a on the data source 1, to trigger the data source 1 to determine corresponding metadata and transmit the metadata corresponding to the data source 1 to the first processing component.

In all embodiments of the present disclosure, the data processing task is split based on the metadata, to obtain the plurality of data processing subtasks.

The computing engine is configured to invoke the data source to execute at least one data processing subtask.

Exemplarily, after the metadata respectively corresponding to the plurality of data sources is acquired, a plurality of pieces of metadata are obtained, and the plurality of pieces of metadata are in a one-to-one correspondence with the plurality of data sources. The plurality of pieces of metadata are respectively analyzed, to split the data processing task.

In all embodiments of the present disclosure, the data processing task is issued to at least one of the plurality of data sources.

The at least one data source is configured for filtering, based on the data processing task, data stored in the data source, to obtain task data.

For first metadata in the plurality of pieces of metadata, a data source corresponding to the first metadata is determined.

Exemplarily, the first metadata is any one of the plurality of pieces of metadata, that is, any piece of metadata is taken as the first metadata for analysis. The data source corresponding to the first metadata is determined from the plurality of data sources based on attribute information represented by the first metadata.

The data processing task is issued to the data source corresponding to the first metadata.

The data source corresponding to the first metadata is configured for filtering, based on the data processing task, data stored in the data source, to obtain the task data.

Exemplarily, when the data processing task is split, an operator push-down method is adopted, and the data processing task is issued to the plurality of data sources, and initial screening is performed on data with the help of data processing capabilities of the data sources. For example, the data processing task is "acquiring a name of an object that is older than 5 years and is taller than one meter". The data processing task is issued to each data source. A description is made by using an example in which any one of the plurality of data sources is analyzed. The data source stores a large amount of age-related information, and the first data source may perform initial screening on the data based on the data processing task. For example, an object that is less than 5 years old is deleted, to filter the data stored in the data source.

Based on the foregoing data filtering process, complexity caused by invoking, by the computing engines, invalid data stored in the data sources can be avoided. For example, if the foregoing data filtering process is not adopted, when the data source 1 is invoked by the computing engine M, the data source 1 needs to transmit a large amount of data stored in the data source 1 to the computing engine M, and the computing engine M performs data screening. If the foregoing data filtering process is adopted, the data source 1 first performs initial screening on the data based on the data processing task. When invoked by the computing engine M, the data source 1 transmits the screened data to the computing engine M, and the computing engine M performs faster data analysis on the screened data. The foregoing process not only can avoid the problem of invocation of invalid data, but also can reduce traffic of network data transmission, and avoid the problem of a relatively large data transmission volume.

In all embodiments of the present disclosure, the data processing task is split based on the task data, to obtain the plurality of data processing subtasks.

Exemplarily, the task data respectively corresponding to the plurality of data sources is determined based on the foregoing process, and the task data represents data obtained after the data sources are screened.

The data processing task is split based on the task data and invocation correspondences between the plurality of data sources and the plurality of computing engines, to obtain the plurality of data processing subtasks.

Operation 340: Determine execution correspondences between the plurality of data processing subtasks and the plurality of computing engines.

Exemplarily, based on that the computing engine is configured to invoke the data source to execute at least one data processing subtask, the computing engine configured to process the data processing subtask can be determined, and then computing engines configured to respectively process the plurality of data processing subtasks can be determined, that is, the execution correspondences between the plurality of data processing subtasks and the plurality of computing engines are determined.

In all embodiments of the present disclosure, one computing engine can execute at least one data processing subtask.

Operation 350: Distribute the plurality of data processing subtasks to task execution engines in the plurality of computing engines based on the execution correspondences.

Exemplarily, after the execution correspondences between the plurality of data processing subtasks and the plurality of computing engines are determined, each data processing subtask is analyzed, and the computing engine having an execution correspondence with each data processing subtask is determined, and the data processing subtask is transmitted to the computing engine having the execution correspondence with the data processing subtask.

The task execution engine is a computing engine configured to execute the data processing subtask, that is, the computing engine having the execution correspondence with the data processing subtask is referred to as a task execution engine.

The plurality of data processing subtasks are respectively transmitted (distributed) to the task execution engines configured to execute the data processing subtasks, and the task execution engine executes the received at least one data processing subtask.

In conclusion, the data processing task is split based on the plurality of data sources, to determine, based on invocation of the data sources by the computing engines, the data processing subtasks executed by different computing engines. A manner of executing the data processing task is simplified by splitting the data processing task, more targeted execution is performed on the data processing subtasks by fully using different computing engines, and task execution efficiency is improved.

In all embodiments of the present disclosure, content in which the first processing component splits the data processing task by acquiring the metadata corresponding to the data sources is described. Based on that the plurality of data sources are registered with the first processing component, the first processing component can acquire the metadata configured for representing the attribute information of the data sources, and further perform more targeted splitting on the data processing task based on the metadata, to determine task parts processed by different computing engines by invoking the data sources and to distribute the data processing subtasks to the different computing engines. Deployment conditions of the plurality of data sources can be more intuitively and accurately expressed by using the metadata, the received data processing subtasks are respectively analyzed by using the plurality of computing engines, and processing efficiency of the data processing task is improved.

In all embodiments of the present disclosure, the first processing component configured to execute the task execution method is deployed in the first cloud environment. After the corresponding task execution engine is determined for any data processing subtask, a manner of transmitting the data processing subtask to the task execution engine is determined according to a deployment location of the task execution engine. Exemplarily, as shown in FIG. 4, operation 240 shown in FIG. 2 may further be implemented by operation 410 to operation 442.

Operation 410: Determine, based on the execution correspondences, the task execution engines respectively corresponding to the plurality of data processing subtasks.

Exemplarily, after the execution correspondences between the plurality of data processing subtasks and the plurality of computing engines are determined, each data processing subtask is analyzed, the computing engine having the execution correspondence with each data processing subtask is determined, and the computing engine having the execution correspondence is taken as the task execution engine corresponding to the data processing subtask. That is, the task execution engine is a computing engine configured to execute the data processing subtask.

In all embodiments of the present disclosure, the plurality of data processing subtasks are distributed to corresponding task execution engines based on a deployment relationship between deployment locations of the task execution engines and the first cloud environment.

The first processing component configured to perform data processing is deployed in the first cloud environment. Cloud is a metaphor for a network or Internet of Things. A cloud environment refers to the Internet or a big data environment that can provide content, such as a computing capability, a storage capability, or a virtual machine service, to a user object or various application systems as required from a dynamically virtualized resource pool.

Exemplarily, based on various data functions implemented in the cloud environment, various functional service architectures for performing data processing are deployed in the cloud environment. The computing engine is deployed in the cloud environment. The data source and the like are deployed in the cloud environment. Exemplarily, the cloud environment is implemented as a cloud computing form such as a private cloud or a public cloud.

In all embodiments of the present disclosure, the plurality of computing engines are configured to execute the data processing task are deployed in at least one cloud environment.

Exemplarily, when the plurality of computing engines configured to execute the data processing task are deployed in a plurality of cloud environments, the data processing task indicates that data processing is executed in a multi-cloud environment. Based on that the task execution engine represents the computing engine corresponding to the data processing subtask, a deployment location of the task execution engine represents a deployment location of the computing engine.

If the at least one cloud environment includes the first cloud environment, a large quantity of computing engines deployed in the first cloud environment include all or part of the computing engines configured to execute the data processing task.

If the at least one cloud environment does not include the first cloud environment, the large quantity of computing engines deployed in the first cloud environment do not include the computing engines configured to execute the data processing task, and the plurality of computing engines configured to execute the data processing task establish a relationship with the first processing component in a registration manner.

The deployment location is content predetermined according to deployment conditions of the computing engine. The deployment relationship is configured for representing an inclusion condition between the deployment location and the first cloud environment.

Exemplarily, the deployment location indicates that the task execution engine (the computing engine) is deployed in the first cloud environment. Alternatively, the deployment location indicates that the task execution engine (the computing engine) is deployed in a cloud environment other than the first cloud environment.

In all embodiments of the present disclosure, the data processing subtask is transmitted to the corresponding task execution engine in a corresponding transmission manner according to the deployment relationship between the deployment location of the task execution engine and the first cloud environment.

Exemplarily, a processing manner procedure of transmitting the data processing subtask to the corresponding task execution engine according to three deployment relationships is shown in operation 421 and operation 422, operation 431 and operation 432, and operation 441 and operation 442.

Operation 421: Determine, from the plurality of data processing subtasks, at least one data processing subtask executed by a first task execution engine as a first data processing subtask in response to that the first task execution engine is deployed in the first cloud environment.

Exemplarily, the first task execution engine is any computing engine configured to perform analysis. For example, the task execution engine configured to execute the data processing subtask is determined according to the data processing subtask. A description is made by using an example in which the task execution engine is the first task execution engine. A deployment location of the first task execution engine is determined, that is, a cloud environment in which the first task execution engine is located is determined from the at least one cloud environment.

The at least one cloud environment includes the first cloud environment, and the first task execution engine is deployed in the first cloud environment, that is, the deployment location of the first task execution engine is the first cloud environment. At least one data processing subtask executed by the first task execution engine is determined from the plurality of data processing subtasks as the first data processing subtask.

The first data processing subtask is configured for representing a data processing subtask processed by a computing engine deployed in the first cloud environment.

Exemplarily, the first task execution engine is a task execution engine determined based on execution of a data processing subtask A1, and the data processing subtask A1 is taken as the first data processing subtask. In addition, another data processing subtask executed by the first task execution engine may be determined based on the first task execution engine and an execution correspondence. The another data processing subtask is also the data processing subtask executed by the first task execution engine by invoking the data source in the first cloud environment, and the another data processing subtask is taken as the first data processing subtask.

That is, the first data processing subtask is implemented as at least one data processing subtask processed by the computing engine deployed in the first cloud environment.

Operation 422: Transmit the first data processing subtask to the first task execution engine.

Exemplarily, after the first task execution engine and the corresponding first data processing subtask are determined, based on that the first processing component is deployed in the first cloud environment, the first processing component may transmit the first data processing subtask to the first task execution engine.

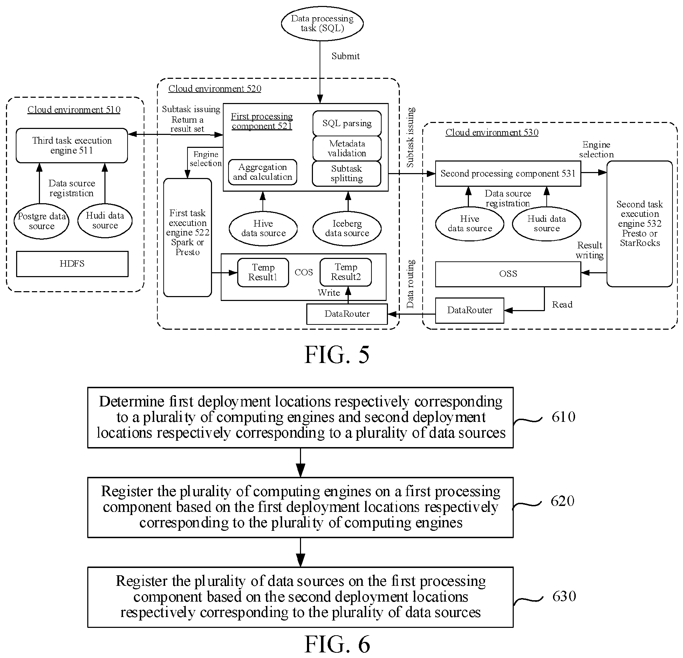

FIG. 5 is a schematic architectural diagram of distributing a plurality of data processing subtasks to task execution engines. Three cloud environments are included: a cloud environment 510, a cloud environment 520, and a cloud environment 530.

A description is made by using an example in which the cloud environment 520 is a first cloud environment. A first processing component 521 is deployed in the cloud environment 520, and a plurality of data sources (a Hive data source and an iceberg data source shown in the figure) are registered with the first processing component. After the first processing component 521 obtains a plurality of data processing subtasks by splitting, for a first task execution engine 522 (for example, the first task execution engine is implemented as Spark or Presto) corresponding to any data processing subtask, when the first task execution engine 522 is deployed in the first cloud environment, at least one data processing subtask executed by the first task execution engine 522 is determined from the plurality of data processing subtasks as the first data processing subtask, and then the first data processing subtask is distributed to the first task execution engine 522.

The cloud environment 510 is implemented as Hadoop Distributed File System (HDFS). The cloud environment 520 is implemented as Cloud Object Storage (COS). The cloud environment 530 is implemented as Object Storage Service (OSS). The foregoing is merely exemplary, and is not limited in all embodiments of the present disclosure.

Operation 431: Determine, from the plurality of data processing subtasks, at least one data processing subtask executed by a second task execution engine as a second data processing subtask in response to that the second task execution engine is deployed in a second cloud environment.

Exemplarily, the second task execution engine is any computing engine configured to perform analysis. For example, the task execution engine configured to execute the data processing subtask is determined according to the data processing subtask. A description is made by using an example in which the task execution engine is the second task execution engine. A deployment location of the second task execution engine is determined, that is, a cloud environment in which the second task execution engine is located is determined from the at least one cloud environment.

The plurality of computing engines run in the at least one cloud environment, and the at least one cloud environment includes the second cloud environment in communication connection with the first cloud environment.

That is, the second cloud environment is a cloud environment different from the first cloud environment. Exemplarily, the first cloud environment is a public cloud T, and the second cloud environment is a public cloud A in communication connection with the public cloud T. Alternatively, the first cloud environment is a public cloud T, and the second cloud environment is a private cloud H in communication connection with the public cloud T.

A second processing component is deployed in the second cloud environment. The second processing component has a same function as the first processing component, and can perform centralized management on a large quantity of computing engines in the cloud environment. When the second processing component executes the data processing task, the second processing component may be referred to as the first processing component, and the second cloud environment in which the second processing component is deployed is referred to as the first cloud environment. This is merely exemplary herein, and is not limited in all embodiments of the present disclosure.

In all embodiments of the present disclosure, when it is determined that the second task execution engine is deployed in the second cloud environment, at least one data processing subtask executed by the second task execution engine is determined from the plurality of data processing subtasks as the second data processing subtask.

The second data processing subtask is configured for representing a data processing subtask processed by a computing engine deployed in the second cloud environment.

Exemplarily, the second task execution engine is a task execution engine determined based on execution of a data processing subtask A2, and the data processing subtask A2 is taken as the second data processing subtask. In addition, another data processing subtask executed by the second task execution engine may be determined based on the second task execution engine and an execution correspondence. The another data processing subtask is also the data processing subtask executed by the second task execution engine by invoking the data source in the second cloud environment, and the another data processing subtask is taken as the second data processing subtask.

That is, the second data processing subtask is implemented as at least one data processing subtask processed by the computing engine deployed in the second cloud environment.

Operation 432: Transmit the second data processing subtask to the second processing component.

The second processing component is configured to transmit the second data processing subtask to the second task execution engine.

A communication relationship is established between the second cloud environment and the first cloud environment through mutual registration between the second processing component and the first processing component. Exemplarily, the second cloud environment registers the second processing component with the first processing component in the first cloud environment; and the first cloud environment registers the first processing component with the second processing component in the second cloud environment.

Because the computing engines in the second cloud environment are registered with the second processing component, an objective of registering the second processing component with the first processing component is to enable the first processing component to learn conditions of the computing engines registered with the second processing component by registering the second processing component with the first processing component. That is, the first processing component learns distribution conditions of the computing engines in the second cloud environment through the second processing component.

That is, based on that the second processing component configured to manage the computing engines is deployed in the second cloud environment, the registered engines, including the second task execution engine, in the second cloud environment are registered with the first processing component in an indirect registration manner.

Exemplarily, after the second task execution engine and the corresponding second data processing subtask are determined, because the second task execution engine is deployed in the second cloud environment, and the second task execution engine is registered with the second processing component, the first processing component transmits the second data processing subtask to the second processing component, and then the second processing component transmits the second data processing subtask to the second task execution engine configured to process the second data processing subtask.

As shown in FIG. 5, a description is made by using an example in which the cloud environment 530 is the second cloud environment. A second processing component 531 is deployed in the cloud environment 530, and a plurality of data sources (for example, a Hive data source and a Hudi data source shown in the figure) are registered with the second processing component. After the first processing component 521 obtains the plurality of data processing subtasks through splitting, for a second task execution engine 532 (for example, the second task execution engine is implemented as Presto or StarRocks) corresponding to any data processing subtask, when the second task execution engine 532 is deployed in the second cloud environment, at least one data processing subtask executed by the second task execution engine 532 is determined from the plurality of data processing subtasks as the second data processing subtask. The first processing component 521 in the cloud environment 520 transmits the second data processing subtask obtained through splitting to the second processing component 531, and then the second processing component 531 having a centralized management function for the computing engines in the cloud environment 530 transmits the second data processing subtask to the corresponding second task execution engine 532.

In all embodiments of the present disclosure, the plurality of data processing subtasks are distributed to the corresponding task execution engines based on the foregoing process.

Operation 441: Determine, from the plurality of data processing subtasks, at least one data processing subtask executed by a third task execution engine as a third data processing subtask in response to that the third task execution engine is deployed in a third cloud environment.

Exemplarily, the third task execution engine is any computing engine configured to perform analysis. For example, the task execution engine configured to execute the data processing subtask is determined according to the data processing subtask. A description is made by using an example in which the task execution engine is the third task execution engine. A deployment location of the third task execution engine is determined, that is, a cloud environment in which the third task execution engine is located is determined from the at least one cloud environment.

The plurality of computing engines run in the at least one cloud environment, the at least one cloud environment includes the third cloud environment in communication connection with the first cloud environment, and a component for performing centralized management on the computing engines is not deployed in the third cloud environment.

That is, the third cloud environment is a cloud environment different from the first cloud environment. The component for performing centralized management on the computing engines is not deployed in the third cloud environment, and the third cloud environment is also different from the second cloud environment.

In all embodiments of the present disclosure, when it is determined that the third task execution engine is deployed in the third cloud environment, at least one data processing subtask executed by the third task execution engine is determined from the plurality of data processing subtasks as the third data processing subtask.

The third data processing subtask is configured for representing a data processing subtask processed by a computing engine deployed in the third cloud environment.

Exemplarily, the third task execution engine is a task execution engine determined based on execution of a data processing subtask A3, and the data processing subtask A3 is taken as the third data processing subtask. In addition, another data processing subtask executed by the third task execution engine may be determined based on the third task execution engine and an execution correspondence. The another data processing subtask is also the data processing subtask executed by the third task execution engine by invoking the data sources in the third cloud environment, and the another data processing subtask is taken as the third data processing subtask.

That is, the third data processing subtask is implemented as at least one data processing subtask processed by the computing engine deployed in the third cloud environment.

Operation 442: Transmit the third data processing subtask to the third task execution engine.

Exemplarily, based on that the component configured to manage the computing engine is not deployed in the third cloud environment, the plurality of third task execution engines are registered with the first processing component in a direct registration manner, and after determining the third task execution engine and the corresponding third data processing subtask, the first processing component may transmit the third data processing subtask to the third task execution engine.

As shown in FIG. 5, a description is made by using an example in which the cloud environment 510 is the third cloud environment is taken. A component (Super SQL) is not deployed in the cloud environment 510, and a plurality of data sources (such as a Postgre data source and a Hudi data source shown in the figure) are indirectly registered with the first processing component 521 in a manner of registering with a computing engine presto. After the first processing component 521 obtains the plurality of data processing subtasks through splitting, for a third task execution engine 511 (for example, the third task execution engine is implemented as Presto), when the third task execution engine 511 is deployed in the third cloud environment, at least one data processing subtask executed by the third task execution engine 511 is determined from the plurality of data processing subtasks as the third data processing subtask. The first processing component 521 in the cloud environment 520 transmits the third data processing subtask obtained through splitting to the corresponding third task execution engine 511.

In conclusion, the data processing task is split based on the plurality of data sources, to determine, based on invocation of the data sources by the computing engines, the data processing subtasks executed by different computing engines. A manner of executing the data processing task is simplified by splitting the data processing task, more targeted execution is performed on the data processing subtasks by fully using different computing engines, and task execution efficiency is improved.

In all embodiments of the present disclosure, when the first processing component deployed in the first cloud environment distributes the data processing subtask to the task execution engine, a subtask transmission manner is determined based on a deployment location of the task execution engine. When a management component (such as: the first processing component and the second processing component) manages the computing engines in the cloud environment in which the management component is deployed, a manner that is more suitable for performing centralized management on the computing engines and accurately transmitting the data processing subtask obtained through splitting by the first processing component to the task execution engine is selected based on registration relationships between the first processing component and the plurality of computing engines and deployment locations respectively corresponding to the plurality of computing engines, and the plurality of data processing subtasks are distributed, whereby the plurality of computing engines favorably perform more targeted execution on the received data processing subtasks.

In all embodiments of the present disclosure, the plurality of computing engines are deployed in at least one cloud environment, and the plurality of computing engines and the plurality of data sources are registered with the first processing component in different registration manners according to cloud environments in which the computing engines and the data sources are respectively located. Exemplarily, as shown in FIG. 6, the embodiment shown in FIG. 2 may further include operation 610 to operation 630.

Operation 610: Determine first deployment locations respectively corresponding to the plurality of computing engines and second deployment locations respectively corresponding to the plurality of data sources.

The first deployment locations are configured for representing cloud environments in which the computing engines are located, and the second deployment locations are configured for representing cloud environments in which the data sources are located.

Exemplarily, the plurality of computing engines are deployed in at least one cloud environment, and the computing engines respectively have corresponding cloud environments. The cloud environments in which the plurality of computing engines are respectively located are determined, to obtain the first deployment locations corresponding to the computing engines.

Two computing engines located in different cloud environments may have a same data processing function, or may have different data processing functions.

Exemplarily, the plurality of data sources are deployed in at least one cloud environment, each data source has a corresponding cloud environment, and the cloud environments in which the plurality of data sources are respectively located are determined, to obtain the second deployment locations corresponding to the data sources.

Two data sources located in different cloud environments may be a same data source (for example, storing same data), or may be different data sources (for example, storing different data).

Operation 620: Register the plurality of computing engines with the first processing component based on the first deployment locations respectively corresponding to the plurality of computing engines.

Exemplarily, the first deployment locations respectively corresponding to the plurality of computing engines are determined, and then different computing engines are registered with the first processing component in corresponding registration manners based on differences represented by the first deployment locations.

In all embodiments of the present disclosure, the first processing component is deployed in a first cloud environment.

Exemplarily, the first processing component can perform centralized management on the computing engines located in the first cloud environment.

In all embodiments of the present disclosure, in response to that a first computing engine is located in the first cloud environment, the first computing engine is registered with the first processing component in a database connectivity manner.

The first computing engine is any one of the plurality of computing engines; and a first deployment location corresponding to the first computing engine is determined, and if the first deployment location indicates that the first computing engine is located in the first cloud environment, the first computing engine is registered with the first processing component in a database connectivity manner.

Exemplarily, the first computing engine is registered with the first processing component by using a Java DataBase connectivity (JDBC) method.

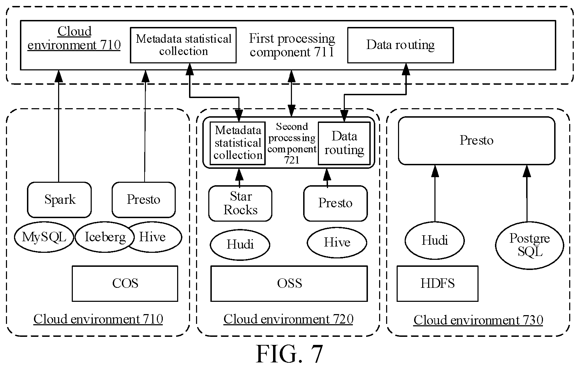

FIG. 7 is a schematic architectural diagram of registering a computing engine and a data source with a first processing component. Three cloud environments are included: a cloud environment 710, a cloud environment 720, and a cloud environment 730. A description is made by using an example in which the cloud environment 710 is a first cloud environment. A first processing component 711 is deployed in the cloud environment 720. For ease of representing a registration relationship, the first processing component 711 and the computing engine and the data source that are deployed in the cloud environment 710 are separately represented.

Based on that a computing engine Spark and a computing engine Presto are computing engines deployed in the cloud environment 710, a first computing engine is registered with a second processing component 721 in a database connectivity manner.

In all embodiments of the present disclosure, the first processing component is deployed in the first cloud environment, at least one cloud environment includes a second cloud environment in communication connection with the first cloud environment, and the second processing component is deployed in the second cloud environment.

Exemplarily, the second processing component can perform centralized management on the computing engines located in the second cloud environment.

In all embodiments of the present disclosure, in response to that the second computing engine is located in the second cloud environment, the second computing engine is registered with the second processing component in a database connectivity manner.

The second computing engine is any one of the plurality of computing engines; and a first deployment location corresponding to the second computing engine is determined, and if the first deployment location indicates that the second computing engine is located in the second cloud environment, the second computing engine is registered with the second processing component in a database connectivity manner.

Exemplarily, the second computing engine is registered with the second processing component by using a JDBC method.

In all embodiments of the present disclosure, a component registration relationship between the second processing component and the first processing component is established.

The component registration relationship includes indirectly registering the second computing engine which is registered with the second processing component with the first processing component.

Exemplarily, in consideration to a fact that the second processing component is deployed in the second cloud environment, and the second processing component is configured to perform centralized management on the computing engines in the second cloud environment, the second computing engine is registered with the second processing component, whereby when managing the second computing engine, the second processing component performs more targeted data communication with the first cloud environment through the first processing component.

The component registration relationship between the second processing component and the first processing component is established by using the JDBC method. For example, the first processing component and the second processing component, which participate in computation, are registered with each other by using the JDBC method.

As shown in FIG. 7, a description is made by using an example in which the cloud environment 720 is the second cloud environment. A second processing component 721 is deployed. Based on that a computing engine StarRocks and the computing engine Presto are the second computing engines deployed in the cloud environment 720, the second computing engines are registered with the second processing component 721 in a database connectivity manner. In addition, a component registration relationship between the second processing component 721 and the first processing component 711 is established by using the JDBC method, whereby the second computing engine which is registered with the second processing component 721 is indirectly registered with the first processing component 711.

In all embodiments of the present disclosure, the first processing component is deployed in the first cloud environment, the at least one cloud environment includes a third cloud environment in communication connection with the first cloud environment, and a component for managing the computing engines is not deployed in the third cloud environment.

In all embodiments of the present disclosure, in response to that a third computing engine is located in the third cloud environment, the third computing engine is registered with the first processing component in a database connectivity manner.

The third computing engine is any one of the plurality of computing engines; and a first deployment location corresponding to the third computing engine is determined, and if the first deployment location indicates that the third computing engine is located in the third cloud environment, the computing engine is taken as a special data source and registered with the first processing component in consideration to a fact that a cross-environment relationship exists between the third cloud environment and the first cloud environment while a component for performing centralized management on the computing engines is not deployed in the third cloud environment. For example, the third computing engine is registered with the first processing component by using the JDBC method.

As shown in FIG. 7, a description is made by using an example in which the cloud environment 730 is the third cloud environment. No component is deployed. Based on that a computing engine Presto is the third computing engine deployed in the cloud environment 730, the third computing engine is considered as a special data source, and is registered with the first processing component 711 in a database connectivity manner.

Operation 630: Register the plurality of data sources with the first processing component based on the second deployment locations respectively corresponding to the plurality of data sources.

Exemplarily, the second deployment locations respectively corresponding to the plurality of data sources are determined, and different data sources are registered with the first processing component in corresponding registration manners based on differences represented by the second deployment locations.

In all embodiments of the present disclosure, the first processing component is deployed in the first cloud environment.

Exemplarily, the first processing component manages the data sources invoked by the computing engines in the first cloud environment, to implement centralized management on the computing engines in the first cloud environment.

In all embodiments of the present disclosure, in response to that the first data source is located in the first cloud environment, the first data source is registered with the first processing component in a database connectivity manner.

The first data source is any one of the plurality of data sources; and the second deployment location corresponding to the first data source is determined, and if the second deployment location indicates that the first data source is located in the first cloud environment, the first data source is registered with the first processing component in a database connectivity manner.

Exemplarily, the first data source is registered with the first processing component by using the JDBC method.

As shown in FIG. 7, a description is made by using an example in which the cloud environment 710 is the first cloud environment. The first processing component 711 is deployed in the cloud environment 710. For ease of representing the registration relationship, the first processing component 711 and the computing engines and the data sources that are deployed in the cloud environment 710 are separately represented. Based on that a data source MySQL, a data source iceberg, and a data source Hive are data sources deployed in the cloud environment 710, the first data source is registered with the first processing component 711 by using the JDBC method.

In all embodiments of the present disclosure, the first processing component is deployed in the first cloud environment, the at least one cloud environment includes the second cloud environment in communication connection with the first cloud environment, and the second processing component is deployed in the second cloud environment.

Exemplarily, the first processing component manages the data sources invoked by the computing engines in the second cloud environment, to implement centralized management on the computing engines in the second cloud environment.

In all embodiments of the present disclosure, in response to that the second data source is located in the second cloud environment, the second data source is registered with the second processing component in the database connectivity manner.

The second data source is any one of the plurality of data sources; and a second deployment location corresponding to the second data source is determined, and if the second deployment location indicates that the second data source is located in the second cloud environment, the second data source is registered with the second processing component in a database connectivity manner.

Exemplarily, the second data source is registered with the second processing component by using the JDBC method.

In all embodiments of the present disclosure, a component registration relationship between the second processing component and the first processing component is established.

The component registration relationship further includes indirectly registering the second data source which is registered with the second processing component with the first processing component. That is, the component registration relationship between the second processing component and the first processing component is not only configured for representing indirect registration of the second computing engine which is registered with the second processing component with the first processing component, but also configured for representing indirect registration of the second data source which is registered with the second processing component with the first processing component.

Exemplarily, in consideration to a fact that the second processing component is deployed in the second cloud environment, and the second processing component manages the data source invoked by the computing engine in the second cloud environment, to implement centralized management on the computing engines in the second cloud environment, the second data source is registered with the second processing component, whereby when managing the second computing engine and invocation of the data source by the second computing engine, the second processing component favorably performs more targeted data communication with the first cloud environment through the first processing component.

The component registration relationship between the second processing component and the first processing component is established by using the JDBC method. For example, the first processing component and the second processing component, which participate in computation, are registered with each other by using the JDBC method.

As shown in FIG. 7, a description is made by using an example in which the cloud environment 720 is the second cloud environment. The second processing component 721 is deployed. Based on that a data source Hudi and a data source Hive are the second data sources deployed in the cloud environment 720, the second data sources are registered with the second processing component 721 in a database connectivity manner. In addition, a component registration relationship between the second processing component 721 and the first processing component 711 is established by using the JDBC method, whereby the second data sources registered with the second processing component 721 are indirectly registered with the first processing component 711.

In all embodiments of the present disclosure, the first processing component is deployed in the first cloud environment, the at least one cloud environment includes a third cloud environment in communication connection with the first cloud environment, and a component for managing a data source is not deployed in the third cloud environment.

In all embodiments of the present disclosure, in response to that a third data source is located in the third cloud environment, a data source registration relationship between the third data source and a third computing engine is established.

As shown in FIG. 7, a description is made by using an example in which the cloud environment 730 is the third cloud environment. No component, such as the first processing component 711 or the second processing component 721, is deployed. A computing engine Presto is deployed in the cloud environment 730 as the third computing engine, and a data source Hudi and a data source PostgreSQL are data sources deployed in the cloud environment 730. Therefore, the third data source may be registered with the second computing engine in a database connectivity manner (for example, the data source Hudi and the data source PostgreSQL are registered with the computing engine Presto), to establish the data source registration relationship between the third data source and the third computing engine.

The data source registration relationship is configured for indirectly registering the third data source which is registered with the third computing engine with the first processing component.

Exemplarily, the third data source registered with the third computing engine is indirectly registered with the first processing component based on the registration relationship of the third computing engine registered with the first processing component.

In conclusion, the data processing task is split based on the plurality of data sources, to determine, based on invocation of the data sources by the computing engines, the data processing subtasks executed by different computing engines. A manner of executing the data processing task is simplified by splitting the data processing task, more targeted execution is performed on the data processing subtasks by fully using different computing engines, and task execution efficiency is improved.

In all embodiments of the present disclosure, the method for registering the plurality of data sources and the plurality of computing engines with the first processing component is described. The plurality of computing engines are registered based on the first deployment locations respectively corresponding to the plurality of computing engines and in the registration manners corresponding to the first deployment locations. The plurality of data sources are registered based on the second deployment locations respectively corresponding to the plurality of data sources and in the registration manners corresponding to the second deployment locations. Through a registration process, the first processing component can acquire metadata corresponding to the plurality of data sources, and learn invocation of the data sources respectively invoked by the plurality of computing engines. Further, the first processing component can perform a more accurate and detailed task splitting process on the data processing task based on the registration process, to obtain the data processing subtasks more suitable for the computing engine to invoke the data source for processing and to improve task execution efficiency.

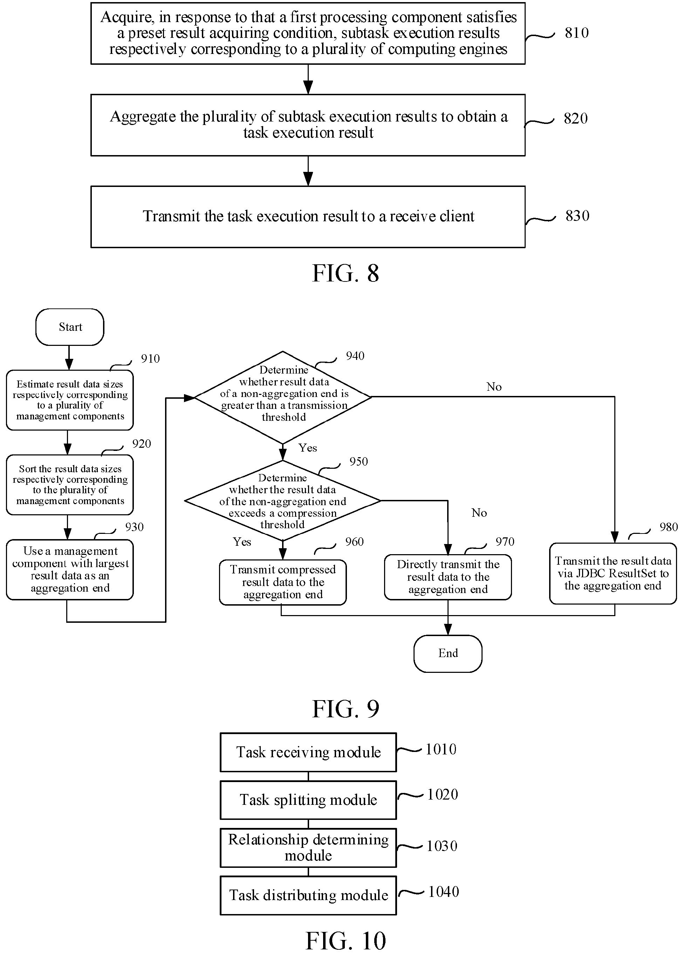

In all embodiments of the present disclosure, the plurality of computing engines process the received data processing subtasks to obtain data processing results, a task execution method is obtained based on aggregation of the plurality of data processing results, and the task execution method is transmitted to a receive client that publishes the data processing task. Exemplarily, as shown in FIG. 8, after operation 240, the embodiment shown in FIG. 2 may further include operation 810 to operation 830.

Operation 810: Acquire, in response to that the first processing component satisfies a preset result acquiring condition, subtask execution results respectively corresponding to the plurality of computing engines.

The preset result acquiring condition is configured for representing a preset condition for acquiring a result, and is configured for acquiring a subtask execution result after the computing engines complete execution of received data processing subtasks. The subtask execution result is a processing result obtained after the computing engines execute the data processing subtasks.

For example, a data processing subtask A1 is to screen data that satisfies a condition a from a data source M. A computing engine 1 for invoking the data source invokes the data source M to query a plurality of pieces of data that satisfy the condition a, and the plurality of pieces of data are taken as a subtask execution result corresponding to the data processing subtask A1.

After the plurality of computing engines respectively process the received data processing subtasks to obtain the subtask execution results corresponding to the data processing subtasks, the first processing component analyzes the plurality of subtask execution results when the first processing component satisfies the preset result acquiring condition.

In all embodiments of the present disclosure, a subtask data volume corresponding to the computing engine is estimated based on the data source invoked by the computing engine when the computing engine executes the data processing subtask.

Exemplarily, the subtask data volume is configured for representing a data scale of the subtask execution result.

For example, the computing engine 1 receives the data processing subtask A1. When the data processing subtask A1 is executed, a data source a needs to be invoked, and a data scale occupied by a subtask execution result obtained after the data processing subtask A1 is processed based on the data source is estimated based on a data scale of the data source a or a data scale of used data in the data source a, that is, a subtask data volume corresponding to the data processing subtask A1 is estimated.

Alternatively, the computing engine 1 receives the data processing subtask A1 and a data processing subtask A2, the data source a needs to be invoked when the data processing subtask A1 is executed, a data source b needs to be invoked when the data processing subtask A2 is executed, and a sum of data scales occupied by subtask execution results respectively obtained after the data processing subtask A1 and the data processing subtask A2 are processed based on the data sources is estimated based on the data source a and the data source b, that is, a subtask data volume corresponding to both the data processing subtask A1 and the data processing subtask A2 is estimated.

Exemplarily, the subtask data volumes respectively corresponding to the plurality of computing engines are determined by using the foregoing method.

In all embodiments of the present disclosure, based on the subtask data volumes respectively corresponding to the plurality of computing engines and management components respectively corresponding to the plurality of computing engines, subtask data results respectively statistically collected by the plurality of management components are determined.

The management component is a component configured to manage computing engine in a cloud environment, such as the first processing component in the first cloud environment or the second processing component in the second cloud environment. The plurality of management components include the first processing component.

Exemplarily, the plurality of computing engines are distributed in at least one cloud environment. The management component may be deployed in the cloud environment in which some computing engines are located (for example, located in the first cloud environment or second cloud environment). Alternatively, no management component is deployed in the cloud environment in which some computing engines are located (for example, located in the third cloud environment).

The subtask data volumes respectively corresponding to the plurality of computing engines are determined, and the management components respectively corresponding to the plurality of computing engines are determined based on the cloud environments in which the plurality of computing engines are located.

Exemplarily, if the computing engine 1 is located in a cloud environment A in which a management component a is deployed, and a management component corresponding to the computing engine 1 is the management component a. If a computing engine 2 is located in a cloud environment C in which no management component is deployed, a management component corresponding to the computing engine 2 is considered "none", that is, a computing engine that does not correspond to a management component may exist in the plurality of computing engines.

The subtask data results respectively statistically collected by the plurality of management components are determined.

Exemplarily, based on correspondences between the plurality of computing engines and the plurality of management components, at least one computing engine corresponding to each management component is determined, a subtask data volume respectively corresponding to the at least one computing engine is determined, a sum of the subtask data volume is taken as the subtask data result corresponding to the management component, and the subtask data results respectively corresponding to the plurality of management components are determined.

In all embodiments of the present disclosure, in response to a largest subtask data result statistically collected by the first processing component, the subtask execution results respectively corresponding to the plurality of computing engines are acquired.

The largest subtask data result is the preset result acquiring condition.

Exemplarily, the plurality of management components include the first processing component. If the subtask execution result statistically collected by the first processing component is the largest, which indicates that a data volume of the subtask execution result after the computing engine managed under the first processing component executes the data processing subtask is relatively large, the first processing component is taken as a component that aggregates other subtask execution results, whereby when the other management components transmit the subtask execution results to the first processing component, a data volume transmitted over a network is relatively small.

Operation 820: Aggregate the plurality of subtask execution results to obtain a task execution result.

Exemplarily, if receiving the plurality of subtask execution results, the first processing component aggregates the plurality of subtask execution results, to obtain the task execution result corresponding to the data processing task.

Operation 830: Transmit the task execution result to a receive client.

Exemplarily, after obtaining, through aggregation, the task execution result corresponding to the data processing task, the first processing component transmits the task execution result to the receive client that publishes the data processing task, whereby a task publishing object learns a processing condition of the data processing task.

In conclusion, the data processing task is split based on the plurality of data sources, to determine, based on invocation of the data sources by the computing engines, the data processing subtasks executed by different computing engines. A manner of executing the data processing task is simplified by splitting the data processing task, more targeted execution is performed on the data processing subtasks by fully using different computing engines, and task execution efficiency is improved.

In all embodiments of the present disclosure, the task execution method is applied to a multi-cloud environment (an environment formed by a plurality of cloud environments), and is referred to as "a cross-computing engine hybrid cloud computing method and architecture". The task execution method may be applied to a big data computing hybrid cloud environment, and a data routing layer is implemented through adaption of a distributed file system.

Exemplarily, as shown in FIG. 7, an overall architecture of a task execution method is described. Three cloud environments are included: a cloud environment 710, a cloud environment 720, and a cloud environment 730. A description is made by using an example in which the cloud environment 710 is a first cloud environment. A first processing component 711 is deployed in the cloud environment 710. For ease of representing a registration relationship, the first processing component 711 and a computing engine and a data source that are deployed in the cloud environment 710 are separately represented.

The management component is further configured with a data routing unit and a metadata statistical collection unit, such as a data routing unit and a metadata statistical collection unit in the first processing component 711, and a data routing unit and a metadata statistical collection unit in a second processing component 721.

The data routing unit is mainly configured to interface with distributed file systems located on different cloud platforms (cloud environments). When data is transmitted, the data routing module in the first processing component 711 in the cloud environment 710 is responsible for processing and reading an intermediate data result from a remote distributed file system. Meanwhile, a local data routing module (such as the second processing component 721) is responsible for receiving the intermediate data result transmitted from a remote end, and writes data into a specified directory of a local distributed file system.

The metadata statistical collection unit is mainly configured to integrate metadata tables (metadata corresponding to the plurality of data sources) on management components deployed in the plurality of cloud environments and statistical information, to form a complete metadata view. Therefore, the first processing component splits the data processing task according to the metadata tables, to obtain the plurality of data processing subtasks. Further, based on statistical information of metadata, an execution plan is optimized, subtask execution data is estimated, and the like.

Exemplarily, as shown in FIG. 7, the plurality of management components (a SuperSQL service) are deployed in the multi-cloud environment participating in federated analysis. When the plurality of management components are registered with each other as engines, the plurality of management components are in an equal status, and can submit a cross-cloud federated analysis task (that is, jointly performing the data processing task by using the plurality of cloud environments).

Before the data processing task is executed, computing resources and data between the plurality of clouds need to be connected. The computing engine (which mainly refers to the computing engine deployed in the first cloud environment, and the SuperSQL service may be considered as the computing engine) and the data source (which mainly is local) are connected to the SuperSQL service by using a registration mechanism, whereby the SuperSQL service has a unified metadata view, and is configured for splitting the data processing task, executing the data processing subtasks, and aggregating the subtask execution results.

For the foregoing manner of only registering the data sources, it is relatively difficult to implement a unique identifier in a cross-cloud scenario, and is also difficult to ensure connectivity on a network architecture. By adopting a manner of registering the computing engines, management efficiency of metadata corresponding to the data sources is improved and multi-style computing resource access is supported, whereby different task types can be accommodated, computing requirements are met. A system can not only adapt to a cross-cloud scenario but also deal with a plurality of network environments, and achieves improved flexibility and stability.
(1) SuperSQL services participating in computation are registered with each other by using a JDBC method. For example, the first processing component in the cloud environment 710 and the second processing component in the cloud environment 720 are registered with each other by using the JDBC method.
(2) If the SuperSQL service exists in the cloud environment, the computing engine and the data source in the cloud environment are registered with the SuperSQL service by using the JDBC method. For example, the computing engine and the data source which are deployed in the cloud environment 710 are registered with the first processing component 711 by using the JDBC method. The computing engine and the data source which are deployed in the cloud environment 720 are registered with the second processing component 721 by using the JDBC method.
(3) If the SuperSQL service does not exist in the cloud environment, the computing engine exists in the cloud environment, and a corresponding data source is deployed in the cloud environment, the computing engine needs to be taken as a special data source and is registered with a SuperSQL service of a remote end by using the JDBC method. The computing engine and the data source in the cloud environment 730 are registered with the first processing component.

Exemplarily, through the foregoing registration process, the first processing component (the SuperSQL service) may acquire engine information corresponding to the computing engine through a standard JDBC interface provided by the computing engine, to learn a data source invoked by the computing engine and determine an invocation correspondence between the data source and the computing engine. The first processing component may further acquire metadata corresponding to the data source through a standard JDBC interface provided by the data source, to learn attribute information of the data source, such as an amount of data and a data type stored therein, and then a unified metadata view (representing a relationship between the data source and the computing engine that invokes the data source) is constructed after the attribute information is aggregated. In (3), the computing engine is a data source of the special data. Because the data routing module can only be configured to read the intermediate data result in the remote distributed file system, result data can only be transmitted through the JDBC interface or the interface provided by the computing engine instead of data routing.

In all embodiments of the present disclosure, FIG. 5 is a schematic architectural diagram of distributing a plurality of data processing subtasks to task execution engines. Three cloud environments are included: a cloud environment 510, a cloud environment 520, and a cloud environment 530.

A description is made by using an example in which the cloud environment 520 is the first cloud environment. A first processing component 521 is deployed in the cloud environment 520, and the task execution method is executed by using the first processing component 521.
(1) A user object submits a data processing task (an SQL task) to the first processing component (a SuperSQL service) in the cloud environment 520, and the first processing component may be referred to as a submission end.
(2) After parsing and validating the data processing task, the first processing component splits the data processing task based on metadata and distributes data processing subtasks to a plurality of computing engines or management components in the cloud environment. Task splitting herein further includes operator push-down, which is configured for performing filtering and reducing traffic of network data transmission. An SQL syntax submitted by a user is a unified SuperSQL syntax. After the data processing subtasks are obtained through splitting, the first processing component converts a dialect of the data processing subtask into a dialect of a corresponding computing engine.
(3) After receiving the data processing subtask, the management component and the computing engine have different processing manners, which are as follows.
   1. The computing engine directly executes the received data processing subtask, and returns ResultSet to the first processing component through a standard JDBC interface or an interface provided by the computing engine.
   2. After receiving the data processing subtask, a management component (such as a second processing component) other than the first management component performs processing on the data processing subtask in a manner consistent with that of the first processing component, such as parsing, validating, and splitting based on the metadata. In this case, because the data processing subtask is already split, the splitting herein does not change task content. Exemplarily, after the second processing component receives the data processing subtask, if the data processing subtask is a subtask that needs to be executed by invoking at least two data sources, the data processing subtask may be replicated as two subtasks with same task content.

Next, a task execution engine for the data execution subtask is selected based on database and table information and a query relationship that are included in the second processing component, as well as statistical information of the metadata. After the task execution engine is determined, the second processing component converts syntax of the data processing subtask into a dialect of the engine, and then the task execution engine processes the data processing subtask, and writes result data in the form of a file into a distributed file system of the cloud environment. Then, the data is outputted to a file system of an aggregation end by using a data routing algorithm.

3. For a data processing subtask needs to be processed by the first processing component, refer to the processing manner of the second processing component for the processing operation.

Exemplarily, when all data processing subtasks are completely executed to obtain subtask execution results, the management component (such as the first processing component) configured to process the subtask execution results is determined, which may be referred to as the aggregation end. A distributed file system in the aggregation end has a plurality of file directories consistent with a quantity of data processing subtasks. Finally, the aggregation end creates a temporary table based on the file directories, performs final aggregation and calculation, to obtain a task execution result, and returns the task execution result to the user object through the JDBC interface of the first processing component.

In all embodiments of the present disclosure, as shown in FIG. 9, a data routing algorithm is described and includes operation 910 to operation 980.

Operation 910: Estimate result data sizes respectively corresponding to a plurality of management components.

Exemplarily, a first processing component estimates a result data scale of a data processing subtask on each of remaining management components based on statistical information of metadata (RBO or CBO), namely, the foregoing subtask data result.

Operation 920: Sort the result data sizes respectively corresponding to the plurality of management components.

Exemplarily, the plurality of management components are sorted according to the estimated result data sizes, and a largest management component is selected as an aggregation end.

If statistical information of metadata of a management component is insufficient to estimate a result data size, to ensure stability, result data of the management component is first written into a local distributed file system by default and then transmitted to the aggregation end, and the management component cannot be taken as an end for executing an aggregation task.

Operation 930: Take a management component with largest result data as an aggregation end.

Exemplarily, when result data (a subtask data result) of the first processing component in the plurality of management components is the largest, the first processing component is taken as a management component configured to aggregate a plurality of subtask execution results.

Operation 940: Determine whether result data of a non-aggregation end is greater than a transmission threshold.

Exemplarily, a description is made by using an example in which the first processing component is the management component configured to aggregate the plurality of subtask execution results. Result data corresponding to the management components other than the first processing component in the plurality of management components is determined, and is compared with a preset transmission threshold.

If the preset transmission threshold is 500 M, the result data corresponding to another management component is compared with 500 MB.

If the result data of the non-aggregation end is greater than the transmission threshold, operation 950 is performed. If the result data of the non-aggregation end is not greater than the transmission threshold, operation 980 is performed.

Operation 950: Determine whether the result data of the non-aggregation end exceeds a compression threshold.

Exemplarily, if the result data of the non-aggregation end is greater than the transmission threshold, the result data of the management component is marked to be first written into the local distributed file system (a result storage path and a file format, which are specified by a data routing module of a submission end, and are taken as parameters and passed to an execution end), and then transmitted to the aggregation end (such as the first processing component) in a manner of Hypertext Transfer Protocol (HTTP).

In addition, whether the result data of the non-aggregation end exceeds a preset compression threshold is determined. If the preset compression threshold is 1 GB, the result data corresponding to the management component is compared with 1 GB.

If the result data of the non-aggregation end is greater than the compression threshold, operation 960 is performed. If the result data of the non-aggregation end is not greater than the compression threshold, operation 970 is performed.

Operation 960: Transmit compressed result data to the aggregation end.

Exemplarily, if the result data of the non-aggregation end is greater than the compression threshold, the result data needs to be first compressed, transmitted to the aggregation end in a manner of HTTP, and then decompressed. A compression algorithm is specified by the submission end, and is transmitted to the execution end and the aggregation end when a task is submitted.

Operation 970: Directly transmit the result data to the aggregation end.

Exemplarily, if the result data of the non-aggregation end is not greater than the compression threshold, the calculated result data does not need to be compressed, and is directly transmitted to the aggregation end in a manner of HTTP.

Operation 980: Transmit the result data via JDBC ResultSet to the aggregation end.

Exemplarily, if the result data of the non-aggregation end is not greater than the transmission threshold, the result data is transmitted to the aggregation end via JDBC ResultSet.

The foregoing is merely exemplary. This is not limited in all embodiments of the present disclosure.

In all embodiments of the present disclosure, according to the task execution method, a data routing module is added to the management component (such as, the first processing component and the second processing component), to complete data transmission in the across-cloud environment and between the computing engines. The data routing module is independently deployed, and provides an HTTP interface for the management component to invoke.

Configuration parameters for enabling a management component are described below.
(1) supersql.datarouter.enabled=true. The configuration parameter is a global switch, and the following configuration parameters, which are as follows (2) to (5), are associated with the global switch.
(2) supersql.datarouter.result.dir=/tmp/data. The configuration parameter indicates a data storage location of a data processing subtask.
(3) supersql.datarouter.result.size=500MB. The configuration parameter indicates a boundary line of a data transmission manner of the data processing subtask. If a result size is less than 500 MB, data transmission is performed by using a JDBC method, and if the result size is greater than 500 MB, data transmission is performed in the manner of HTTP. The 500 MB herein is an exemplary description of the transmission threshold, and is not limited herein.
(4) supersql.datarouter.compression.result.enable=true. The configuration parameter indicates whether data of the data processing subtask is compressed before transmission.
(5) supersql.datarouter.encryption.result.enable=true. The configuration parameter indicates whether the data of the data processing subtask is encrypted before transmission.

In addition, a plurality of configuration parameters may further be configured on the management component, and are not listed one by one herein. For example, a data source (such as SuperSQL, Presto, and Spark) of a corresponding engine type needs to be added on a product side. This is not limited in all embodiments of the present disclosure.

In conclusion, the data processing task is split based on the plurality of data sources, to determine, based on invocation of the data sources by the computing engines, the data processing subtasks executed by different computing engines. A manner of executing the data processing task is simplified by splitting the data processing task, more targeted execution is performed on the data processing subtasks by fully using different computing engines, and task execution efficiency is improved.

In all embodiments of the present disclosure, the task execution method may be applied to a hybrid cloud scenario, to implement federated computation and analysis across computing engines, whereby multi-cloud federated computing is implemented. Within a data center, a plurality of computing engines are adopted based on features and a data scale of the computing engines to accelerate multi-table federated analysis and reduce waste of computational resources of the engines. An operator push-down may be adopted as an optimization method in a task splitting process, to achieve filtering and reduce traffic of network data transmission. In addition, a manner such as compression may be adopted in a data transmission process, to reduce cross-cloud network traffic and reduce federated analysis costs.

FIG. 10 is a structural block diagram of a task execution apparatus according to an exemplary embodiment of the present disclosure. As shown in FIG. 10, the apparatus includes:
a task receiving module 1010, configured to receive a data processing task, the data processing task being a task to be cooperatively executed by a plurality of computing engines, and the plurality of computing engines and a plurality of data sources invoked by the computing engines being registered with a first processing component;
a task splitting module 1020, configured to split the data processing task based on the plurality of data sources registered with the first processing component, to obtain a plurality of data processing subtasks, each computing engine being configured to invoke the data source to execute at least one data processing subtask;
a relationship determining module 1030, configured to determine execution correspondences between the plurality of data processing subtasks and the plurality of computing engines; and
a task distributing module 1040, configured to distribute the plurality of data processing subtasks to task execution engines in the plurality of computing engines based on the execution correspondences, the task execution engines being computing engines configured to execute the data processing subtasks.

In all embodiments of the present disclosure, the task splitting module 1020 is further configured to determine invocation correspondences between the plurality of data sources and the plurality of computing engines based on the plurality of computing engines registered with the first processing component, the invocation correspondences being configured for representing relationships in which the data sources are invoked by the computing engines; and split the data processing task based on the plurality of data sources registered with the first processing component and the invocation correspondences, to obtain the plurality of data processing subtasks.

In all embodiments of the present disclosure, the task splitting module 1020 is further configured to determine, based on the plurality of data sources registered with the first processing component and the invocation correspondences, a task processing part implemented by at least one data source of a same computing engine when the data processing task is executed; and split the data processing task based on the task processing parts respectively corresponding to the plurality of computing engines, to obtain the plurality of data processing subtasks.

In all embodiments of the present disclosure, the task splitting module 1020 is further configured to acquire metadata respectively corresponding to the plurality of data sources, the metadata being configured for representing attribute information corresponding to the data sources; and split the data processing task based on the metadata, to obtain the plurality of data processing subtasks.

In all embodiments of the present disclosure, the task splitting module 1020 is further configured to issue the data processing task to at least one of the plurality of data sources, the at least one data source being configured for filtering, based on the data processing task, data stored in the data source, to obtain task data; and split the data processing task based on the task data, to obtain the plurality of data processing subtasks.

In all embodiments of the present disclosure, the first processing component is deployed in a first cloud environment; and
the task distributing module 1040 is further configured to determine, based on the execution correspondences, the task execution engines respectively corresponding to the plurality of data processing subtasks; and distribute the plurality of data processing subtasks to the corresponding task execution engines based on a deployment relationship between deployment locations of the task execution engines and the first cloud environment.

In all embodiments of the present disclosure, the task distributing module 1040 is further configured to determine, from the plurality of data processing subtasks, at least one data processing subtask executed by a first task execution engine as a first data processing subtask in response to that the first task execution engine is deployed in the first cloud environment; and transmit the first data processing subtask to the first task execution engine, and distribute the plurality of data processing subtasks to the corresponding task execution engines.

In all embodiments of the present disclosure, the plurality of computing engines run in at least one cloud environment, the at least one cloud environment includes a second cloud environment in communication connection with the first cloud environment, and a second processing component is deployed in the second cloud environment; and
the task distributing module 1040 is further configured to determine, from the plurality of data processing subtasks, at least one data processing subtask executed by a second task execution engine as a second data processing subtask in response to that the second task execution engine is deployed in the second cloud environment; transmit the second data processing subtask to the second processing component, the second processing component being configured to transmit the second data processing subtask to the second task execution engine; and distribute the plurality of data processing subtasks to the corresponding task execution engines.

In all embodiments of the present disclosure, the plurality of computing engines run in at least one cloud environment, the at least one cloud environment includes a third cloud environment in communication connection with the first cloud environment, and a component for performing centralized management on the computing engines is not deployed in the third cloud environment; and
the task distributing module 1040 is further configured to determine, from the plurality of data processing subtasks, at least one data processing subtask executed by a third task execution engine as a third data processing subtask in response to that the third task execution engine is deployed in the third cloud environment; and transmit the third data processing subtask to the third task execution engine, and distribute the plurality of data processing subtasks to the corresponding task execution engines.

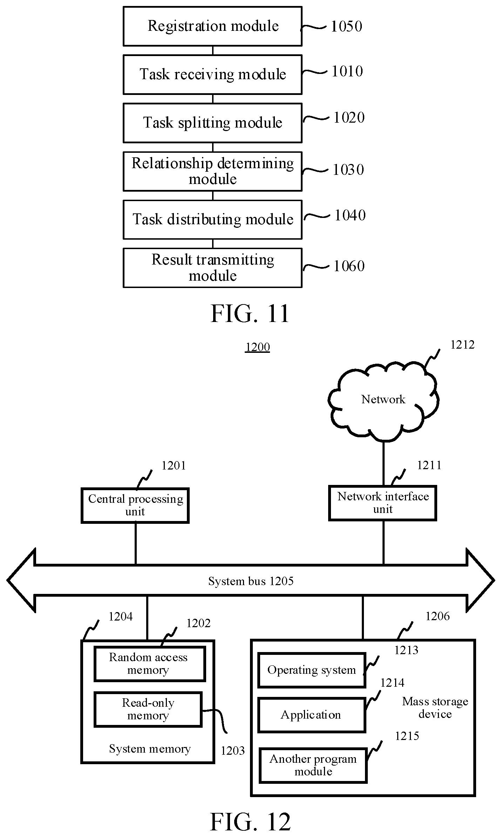

In all embodiments of the present disclosure, as shown in FIG. 11, a plurality of computing engines are deployed in at least one cloud environment.

The apparatus includes:
a registration module 1050, configured to determine first deployment locations respectively corresponding to the plurality of computing engines and second deployment locations respectively corresponding to a plurality of data sources, the first deployment locations being configured for representing cloud environments in which the computing engines are located, and the second deployment locations being configured for representing cloud environments in which the data sources are located; register the plurality of computing engines with a first processing component based on the first deployment locations respectively corresponding to the plurality of computing engines; and register the plurality of data sources with the first processing component based on the second deployment locations respectively corresponding to the plurality of data sources.

In all embodiments of the present disclosure, the first processing component is deployed in a first cloud environment; and
the registration module 1050 is further configured to register a first computing engine with the first processing component in a database connectivity manner in response to that the first computing engine is located in the first cloud environment; and register a first data source with the first processing component in a database connectivity manner in response to that the first data source is located in the first cloud environment.

In all embodiments of the present disclosure, the first processing component is deployed in the first cloud environment, the at least one cloud environment includes a second cloud environment in communication connection with the first cloud environment, and a second processing component is deployed in the second cloud environment; and
the registration module 1050 is further configured to register a second computing engine with the second processing component in a database connectivity manner in response to that the second computing engine is located in the second cloud environment; establish a component registration relationship between the second processing component and the first processing component, the component registration relationship including indirectly registering the second computing engine which is registered with the second processing component with the first processing component; register a second data source with the second processing component in a database connectivity manner in response to that the second data source is located in the second cloud environment; and establish the component registration relationship between the second processing component and the first processing component, the component registration relationship further including indirectly registering the second data source which is registered with the second processing component with the first processing component.

In all embodiments of the present disclosure, the first processing component is deployed in the first cloud environment, the at least one cloud environment includes a third cloud environment in communication connection with the first cloud environment, and a management component configured to manage the computing engines is not deployed in the third cloud environment; and
the registration module 1050 is further configured to register a third computing engine with the first processing component in a database connectivity manner in response to that the third computing engine is located in the third cloud environment; and establish a data source registration relationship between a third data source and the third computing engine in response to that the third data source is located in the third cloud environment, the data source registration relationship being configured for indirectly registering the third data source which is registered with the third computing engine with the first processing component.

In all embodiments of the present disclosure, as shown in FIG. 11, the apparatus further includes:
a result transmitting module 1060, configured to acquire subtask execution results respectively corresponding to the plurality of computing engines in response to that the first processing component satisfies a preset result acquiring condition; aggregate the plurality of subtask execution results to obtain a task execution result; and transmit the task execution result to a receive client that publishes a data processing task.

In all embodiments of the present disclosure, the result transmitting module 1060 is further configured to estimate, based on a data source invoked by the computing engine when the computing engine executes the data processing subtask, a subtask data volume corresponding to the computing engine, the subtask data volume being configured for representing a data scale of the subtask execution result; determine, based on the subtask data volumes respectively corresponding to the plurality of computing engines and management components respectively corresponding to the plurality of computing engines, subtask data results respectively statistically collected by the plurality of management components, the management components being components configured to manage the computing engines in the cloud environment, and the plurality of management components including the first processing component; and acquire the subtask execution results respectively corresponding to the plurality of computing engines in response to a largest subtask data result statistically collected by the first processing component, the largest subtask data result being the preset result acquiring condition.

In conclusion, the data processing task is split based on the plurality of data sources, to determine, based on invocation of the data sources by the computing engines, data processing subtasks executed by different computing engines. A manner of executing the data processing task is simplified by splitting the data processing task, more targeted execution is performed on the data processing subtasks by fully using different computing engines, and task execution efficiency is improved.

The task execution apparatus provided in the foregoing embodiments is illustrated only with an example of division of the foregoing function modules. In practical applications, the foregoing functions may be allocated to and completed by different function modules according to requirements. That is, an internal structure of a device is divided into different function modules to complete all or some of the functions described above. In addition, the task execution apparatus provided in the foregoing embodiments and the task execution method embodiments belong to the same conception. For a specific implementation process, refer to the method embodiments. Details are not described herein again.

FIG. 12 is a schematic structural diagram of a server according to an exemplary embodiment of the present disclosure. A server 1200 includes a central processing unit (CPU) 1201, a system memory 1204 including a random-access memory (RAM) 1202 and a read-only memory (ROM) 1203, and a system bus 1205 connecting the system memory 1204 and the CPU 1201. The server 1200 further includes a mass storage device 1206 configured to store an operating system 1213, an application 1214, and another program module 1215.

The mass storage device 1206 is connected to the CPU 1201 through a mass storage controller (not shown) connected to the system bus 1205. The mass storage device 1206 and a computer-readable medium associated with the mass storage device 1206 provide non-volatile storage for the server 1200. That is, the mass storage device 1206 may include a computer-readable medium (not shown) such as a hard disk or a compact disc ROM (CD-ROM) drive.

The computer-readable medium may include a computer storage medium and a communications medium. The computer storage medium includes volatile and non-volatile media, and removable and non-removable media implemented by using any method or technology for storing information such as computer-readable instructions, data structures, program modules, or other data. The system memory 1204 and the mass storage device 1206 may be collectively referred to as a memory.

According to all embodiments of the present disclosure, the server 1200 may further be connected, through a network such as the Internet, to a remote computer on the network and run. That is, the server 1200 may be connected to a network 1212 through a network interface unit 1211 that is connected to the system bus 1205, or may be connected to a network of another type or a remote computer system (not shown) through the network interface unit 1211.

The foregoing memory further includes one or more programs. The one or more programs are stored in the memory and are configured to be executed by the CPU.

The embodiments of the present disclosure further provide a computer device, which includes a processor and a memory. The memory has at least one instruction, at least one program, a code set, or an instruction set stored therein, the at least one instruction, the at least one program, the code set, or the instruction set is loaded and executed by the processor to implement the task execution method provided in the foregoing method embodiments.

The embodiments of the present disclosure further provide a computer-readable storage medium, which has at least one instruction, at least one program, a code set, or an instruction set stored therein. The at least one instruction, the at least one program, the code set, or the instruction set are loaded and executed by a processor to implement the task execution method provided in the foregoing method embodiments.

The embodiments of the present disclosure further provide a computer program product or a computer program, which includes computer instructions. The computer instructions are stored in a computer-readable storage medium. A processor of a computer device reads the computer instructions from the computer-readable storage medium, and executes the computer instructions, to cause the computer device to perform the task execution method according to any one of the foregoing embodiments.

The foregoing descriptions are merely exemplary embodiments of the present disclosure, and are not intended to limit the present disclosure. Any modification, equivalent replacement, improvement, and the like made within the spirit and principle of the present disclosure fall within the scope of protection of the present disclosure.

## Claims

1. A task execution method for processing data, executable by a first processing component and comprising:
receiving a data processing task to be cooperatively executed by a plurality of computing engines, wherein the plurality of computing engines and a plurality of data sources respectively invoked by the plurality of computing engines are registered on the first processing component;
splitting the data processing task based on the plurality of data sources, for obtaining a plurality of data processing subtasks, each computing engine being configured to invoke the at least one of the plurality of data sources in order to execute at least one of the plurality of data processing subtasks;
determining execution correspondences between the plurality of data processing subtasks and the plurality of computing engines; and
distributing the plurality of data processing subtasks to task execution engines in the plurality of computing engines based on the execution correspondences, the task execution engines being computing engines configured to execute the plurality of data processing subtasks.

2. The method according to claim 1, wherein the splitting the data processing task based on the plurality of data sources registered on the first processing component, for obtaining the plurality of data processing subtasks comprises:
determining invocation correspondences between the plurality of data sources and the plurality of computing engines based on the plurality of computing engines registered on the first processing component, each invocation correspondence being configured for representing a relationship where a data source is invoked by a computing engine; and
splitting the data processing task based on the plurality of data sources registered on the first processing component and the invocation correspondences, for obtaining the plurality of data processing subtasks.

3. The method according to claim 2, wherein splitting the data processing task based on the plurality of data sources registered on the first processing component and the invocation correspondences, for obtaining the plurality of data processing subtasks comprises:
determining, based on the plurality of data sources registered on the first processing component and the invocation correspondences, a task processing part implemented by at least one of the plurality of data sources of a same computing engine when the data processing task is executed; and
splitting the data processing task based on the task processing parts respectively corresponding to the plurality of computing engines, for obtaining the plurality of data processing subtasks.

4. The method according to any one of claims 1 to 3, wherein splitting the data processing task based on the plurality of data sources registered on the first processing component, for obtaining the plurality of data processing subtasks comprises:
acquiring metadata respectively corresponding to the plurality of data sources, the metadata being configured for representing attribute information corresponding to the plurality of data sources; and
splitting the data processing task based on the metadata, for obtaining the plurality of data processing subtasks.

5. The method according to any one of claims 1 to 3, wherein the splitting the data processing task based on the plurality of data sources registered with the first component, for obtaining a plurality of data processing subtasks comprises:
issuing the data processing task to at least one data source of the plurality of data sources, the at least one data source being configured for filtering, based on the data processing task, data stored therein, for obtaining task data; and
splitting the data processing task based on the task data, for obtaining the plurality of data processing subtasks.

6. The method according to any one of claims 1 to 3, wherein the first processing component is deployed in a first cloud environment; and
distributing the plurality of data processing subtasks to task execution engines in the plurality of computing engines based on the execution correspondences comprises:
determining, based on the execution correspondences, the task execution engines respectively corresponding to the plurality of data processing subtasks, and
distributing the plurality of data processing subtasks to a corresponding task execution engines based on a deployment relationship between deployment locations of the task execution engines and the first cloud environment.

7. The method according to claim 6, wherein distributing the plurality of data processing subtasks to the corresponding task execution engines based on the deployment relationship between the deployment locations of the task execution engines and the first cloud environment comprises:
determining, from the plurality of data processing subtasks, at least one data processing subtask executed by a first task execution engine as a first data processing subtask in response to the first task execution engine being deployed in the first cloud environment; and
transmitting the first data processing subtask to the first task execution engine.

8. The method according to claim 6, wherein the plurality of computing engines runs in at least one cloud environment, the at least one cloud environment comprises a second cloud environment in communication connection with the first cloud environment, and a second processing component is deployed in the second cloud environment; and
distributing the plurality of data processing subtasks to the corresponding task execution engines based on the deployment relationship between the deployment locations of the task execution engines and the first cloud environment comprises:
determining, from the plurality of data processing subtasks, at least one data processing subtask executed by a second task execution engine as a second data processing subtask in response to the second task execution engine being deployed in the second cloud environment, and
transmitting the second data processing subtask to the second processing component, the second processing component being configured to transmit the second data processing subtask to the second task execution engine.

9. The method according to claim 6, wherein the plurality of computing engines run in at least one cloud environment, the at least one cloud environment comprises a third cloud environment in communication connection with the first cloud environment, and a component configured to perform centralized management on the plurality of computing engines is not deployed in the third cloud environment; and
distributing the plurality of data processing subtasks to the corresponding task execution engines based on the deployment relationship between the deployment locations of the task execution engines and the first cloud environment comprises:
determining, from the plurality of data processing subtasks, at least one data processing subtask executed by a third task execution engine as a third data processing subtask in response to the third task execution engine being deployed in the third cloud environment, and
transmitting the third data processing subtask to the third task execution engine.

10. The method according to any one of claims 1 to 3, wherein the plurality of computing engines are deployed in at least one cloud environment; and
the method further comprises:
determining first deployment locations respectively corresponding to the plurality of computing engines and second deployment locations respectively corresponding to the plurality of data sources, the first deployment locations being configured for representing cloud environments where the computing engines are located, and the second deployment locations being configured for representing cloud environments where the plurality of data sources are located,
registering the plurality of computing engines with the first processing component based on the first deployment locations respectively corresponding to the plurality of computing engines, and
registering the plurality of data sources with the first processing component based on the second deployment locations respectively corresponding to the plurality of data sources.

11. The method according to claim 10, wherein the first processing component is deployed in a first cloud environment;
registering the plurality of computing engines with the first processing component based on the first deployment locations respectively corresponding to the plurality of computing engines comprises:
registering a first computing engine with the first processing component in a database connectivity manner in response to the first computing engine being located in the first cloud environment; and
registering the plurality of data sources with the first processing component based on the second deployment locations respectively corresponding to the plurality of data sources comprises:
registering a first data source with the first processing component in a database connectivity manner in response to the first data source being located in the first cloud environment.

12. The method according to claim 10, wherein the first processing component is deployed in a first cloud environment, the at least one cloud environment comprises a second cloud environment in communication connection with the first cloud environment, and a second processing component is deployed in the second cloud environment;
registering the plurality of computing engines with the first processing component based on the first deployment locations respectively corresponding to the plurality of computing engines comprises:
registering a second computing engine with the second processing component in a database connectivity manner in response to the second computing engine being located in the second cloud environment and establishing a component registration relationship between the second processing component and the first processing component, the component registration relationship comprising indirectly registering the second computing engine with the first processing component, wherein the second computing engine is registered on the second processing component; and
registering the plurality of data sources with the first processing component based on the second deployment locations respectively corresponding to the plurality of data sources comprises:
registering a second data source with the second processing component in a database connectivity manner in response to the second data source being located in the second cloud environment and establishing the component registration relationship between the second processing component and the first processing component, the component registration relationship further comprising indirectly registering the second data source with the first processing component, wherein the second data source is registered on the second processing component.

13. The method according to claim 10, wherein the first processing component is deployed in a first cloud environment, the at least one cloud environment comprises a third cloud environment in communication connection with the first cloud environment, and a management component configured to manage the computing engines is not deployed in the third cloud environment;
registering the plurality of computing engines with the first processing component based on the first deployment locations respectively corresponding to the plurality of computing engines comprises:
registering a third computing engine with the first processing component in a database connectivity manner in response to that the third computing engine is located in the third cloud environment; and
registering the plurality of data sources with the first processing component based on the second deployment locations respectively corresponding to the plurality of data sources comprises:
establishing a data source registration relationship between a third data source and the third computing engine in response to that the third data source is located in the third cloud environment, the data source registration relationship being configured for indirectly registering the third data source which is registered on the third computing engine with the first processing component.

14. The method according to any one of claims 1 to 3, after distributing the plurality of data processing subtasks to task execution engines in the plurality of computing engines based on the execution correspondences, further comprising:
acquiring subtask execution results respectively corresponding to the plurality of computing engines in response to the first processing component satisfies a preset result acquiring condition;
aggregating subtask execution results for obtaining a task execution result; and
transmitting the task execution result to a receive client, wherein the receive client publishes the data processing task.

15. The method according to claim 14, wherein the acquiring subtask execution results respectively corresponding to the plurality of computing engines in response to the first processing component satisfies a preset result acquiring condition comprises:
estimating, based on the data source invoked by the computing engine when the computing engine executes the data processing subtask, a subtask data volume corresponding to the computing engine, the subtask data volume being configured for representing a data scale of the subtask execution result;
determining, based on the subtask data volumes respectively corresponding to the plurality of computing engines and a plurality of management components respectively corresponding to the plurality of computing engines, subtask data results respectively collected by the plurality of management components, the management components being components configured to manage the computing engines in a cloud environment, and the plurality of management components comprising the first processing component; and
acquiring the subtask execution results respectively corresponding to the plurality of computing engines in response to a largest subtask data result statistically collected by the first processing component, the largest subtask data result being the preset result acquiring condition.

16. A task execution apparatus, comprising:
a task receiving module, configured to receive a data processing task, the data processing task being a task to be cooperatively processed by a plurality of computing engines, and the plurality of computing engines and at least one data source respectively invoked by the plurality of computing engines being registered with a first component;
a task splitting module, configured to split the data processing task based on the plurality of data sources registered with the first component, to obtain a plurality of data processing subtasks, each computing engine being configured to invoke the data source to execute at least one data processing subtask;
a relationship determining module, configured to determine execution correspondences between the plurality of data processing subtasks and the plurality of computing engines; and
a task distributing module, configured to distribute the plurality of data processing subtasks to task execution engines in the plurality of computing engines based on the execution correspondences, the task execution engines being computing engines configured to execute the data processing subtasks.

17. The apparatus according to claim 16, wherein the task splitting module is further configured to determine invocation correspondences between the plurality of data sources and the plurality of computing engines based on the plurality of computing engines registered with the first component, the invocation correspondence being configured for representing a relationship in which the data source is invoked by the computing engine; and split the data processing task based on the plurality of data sources registered with the first component and the invocation correspondences, to obtain the plurality of data processing subtasks.

18. A computer device, comprising a processor and a memory, the memory storing at least one program, the at least one program being loaded and executed by the processor to implement the task execution method according to any one of claims 1 to 15.

19. A computer-readable storage medium, having at least one program stored therein, the at least one program being loaded and executed by a processor to implement the task execution method according to any one of claims 1 to 15.

20. A computer program product, comprising computer instructions, the computer instructions being loaded and executed by a processor to implement the task execution method according to any one of claims 1 to 15.
